# EUROPEAN PATENT APPLICATION

(11) **EP 1 684 283 A1**
(43) Date of publication of application: **26.07.2006**
(21) Application number: 04745913.6
(22) Date of filing: 15.06.2004
(51) Int. Cl.: G11B 7/26

(54) **OPTICAL RECORDING MEDIUM SAMPLE FABRICATING METHOD, OPTICAL RECORDING MEDIUM SAMPLE ANALYZING METHOD, OPTICAL RECORDING MEDIUM SAMPLE FABRICATING APPARATUS, AND OPTICAL RECORDING MEDIUM FABRICATING METHOD**

(30) Priority: 13.11.2003 JP 2003384159; 28.11.2003 JP 2003400486
(71) Applicant: TDK Corporation, Chuo-ku, Tokyo 103-8272 (JP)
(72) Inventor: SHIRASUNA, Kenji, TDK Corporation, Chuo-ku, Tokyo 1038272 (JP); SUNOHARA, Hideki, TDK Corporation, Chuo-ku, Tokyo 1038272 (JP)
(74) Representative: Grünecker, Kinkeldey, Stockmair & Schwanhäusser Anwaltssozietät
(86) International application number: PCT/JP2004/008359
(87) International publication number: WO 2005/048254

(57) **Abstract**

The method of making an optical recording medium sample in accordance with the present invention comprises a laminate preparing step of preparing a laminate including a substrate used for an optical recording medium, and a functional layer formed adjacent to one side of the substrate; and a substrate removing step of removing a predetermined part of the substrate in the laminate so as to expose a contact surface of the functional layer with the substrate. In the optical recording medium sample obtained by the above-mentioned making method, since the functional layer is disposed in conformity to the surface of the substrate, profiles such as grooves, lands, and surface roughness of the surface of the substrate on the functional layer side are accurately transferred with a high precision to the exposed contact surface. Therefore, analyzing the exposed contact surface can grasp the surface form of the substrate.

## Description

### Technical Field

The present invention relates to a method of making an optical recording medium sample, a method of analyzing an optical recording medium sample, an apparatus for making an optical recording medium sample, and a method of manufacturing an optical recording medium.

### Background Art

In the field of optical recording media such as optical disks typified by CD (Compact Disk), CD-R (Compact Disk Recordable), CD-RW (Compact Disk ReWritable), and DVD (Digital Versatile Disk), those having more complicated, finer structures have recently been under development in order to realize optical recording media having a larger capacity or rewritable optical recording media. Specifically, so-called Blu-ray disks and the like have been under study as optical recording media with an increased capacity (see, for example, Non-patent References 1 to 3).

Advanced manufacturing techniques are required for making such an optical recording medium because of its complicity and fineness. In order for a product to keep a yield on a par with that of conventional optical recording media, its quality control becomes an element more important than in conventional ones.

Among this kind of optical recording media, "colorant-based optical recording media" usually have a structure in which a recording layer containing an organic colorant, a reflecting layer, etc. are laminated on a substrate, or a structure further comprising a dielectric layer between the substrate and recording layer. In such a "colorant-based optical recording medium", the surface form of the substrate on the laminate side (the side laminated with the recording layer and the like) affects characteristics of the optical recording medium, so that the surface must be analyzed accurately with a high precision in the quality control.

The following method has conventionally been known in general as a method of analyzing the laminate-side surface of the substrate. First, the individual layers laminated on the substrate are successively removed from the uppermost layer (the layer formed on the farthest side from the substrate) by removing means such as peeling with adhesive tapes, dissolution with acids, and etching with accelerated charged particles such as sputtering particles under reduced pressure, so that the substrate surface on the side where these layers are arranged is finally exposed. The form of thus exposed surface of the substrate is observed, the layer structure is analyzed, or recording marks are measured.
Non-patent Reference 1: Nikkei Electronics, March 31 Issue, 2003, pp. 135-150, Nikkei Business Publications, Inc.
Non-patent Reference 2: Nikkei Electronics, May 12 Issue, 2003, pp. 119-133, Nikkei Business Publications, Inc.
Non-patent Reference 3: Nikkei Electronics, June 9 Issue, 2003, pp. 57-64, Nikkei Business Publications, Inc.

### Disclosure of the Invention

### Problem to be Solved by the Invention

However, the inventors studied the above-mentioned conventional analyzing method in detail and have found that the dielectric layer, recording layer, or the like remains on the laminate-side surface of the substrate even after the step of removing the individual layers when this analyzing method is used. If an analysis such as observation of the substrate surface is carried out while in a state where the individual layers remain on the substrate surface as such, the state of grooves or lands formed on the substrate or the surface roughness of the substrate, for example, will be hard to grasp accurately, whereby the precision in analysis will deteriorate.

In view of the circumstances mentioned above, it is an object of the present invention to provide a method of making an optical recording medium sample, a method of analyzing an optical recording medium sample, an apparatus for making an optical recording medium sample, and a method of manufacturing an optical recording medium, which can analyze the surface state of substrates of optical recording media sufficiently accurately with a high precision.

### Means for Solving Problem

The inventors conducted diligent studies in order to achieve the above-mentioned object and, as a result, have found that, without directly analyzing the laminate-side surface of a substrate of an optical recording medium, the surface state of the substrate can be grasped if an optical recording medium sample having a specific structure is made and analyzed, thereby completing the present invention.

Namely, the method of making an optical recording medium sample in accordance with the present invention comprises a laminate preparing step of preparing a laminate including a substrate used for an optical recording medium, and a functional layer formed adjacent to one side of the substrate; and a substrate removing step of removing a predetermined part of the substrate in the laminate so as to expose a contact surface of the functional layer with the substrate.

The above-mentioned method prepares a laminate having the above-mentioned specific structure, and removes a predetermined part of the laminate so as to expose a contact surface of the functional layer with the substrate, whereby an optical recording medium sample useful for analyzing the surface state of the substrate accurately with a high precision can be obtained easily and reliably.

Namely, while the conventional method of making an optical recording medium sample removes a plurality of layers on the substrate from the optical recording medium so as to expose the substrate surface to be analyzed; the method of making an optical recording medium in accordance with the present invention yields an optical recording medium sample with an exposed contact surface of the functional layer with the substrate by removing a predetermined part of the substrate. In this optical recording medium sample, since the functional layer is disposed in conformity to the surface of the substrate, profiles such as grooves, lands, and surface roughness of the surface of the substrate on the functional layer side are accurately transferred with a high precision to the exposed contact surface. Therefore, analyzing the exposed contact surface can grasp the surface form of the substrate.

While it is necessary for the conventional method of making an optical recording medium to choose appropriate removing means according to respective constituent materials of individual layers when removing a plurality of layers formed on the substrate, it is sufficient for the method of making an optical recording medium sample in accordance with the present invention to remove the substrate alone in order to expose the contact surface, whereby the time, labor, and cost can sufficiently be lowered. Further, the substrate used in the optical recording medium is transparent to light for reproducing or recording and thus can usually be removed by dissolution or the like more easily than materials of functional layers such as dielectric layers, whereby no constituent materials remain on the exposed contact surface.

The method of making an optical recording medium sample in accordance with the present invention can take the following modes according to the structure of the optical recording medium to be analyzed.

Namely, when the optical recording medium to be analyzed is one comprising a dielectric formed adjacent to a substrate between the substrate and a recording layer, it will be preferred if the laminate preparing step is a step of preparing a laminate including the substrate and a dielectric layer formed adjacent to one side of the substrate, and the substrate removing step is a step of removing a predetermined part of the substrate so as to expose a contact surface of the dielectric layer with the substrate. In the following, the method of making an optical recording medium having such a configuration will be referred to as "first preferred making method" for convenience.

Though the reason why the above-mentioned problems are overcome by employing the above-mentioned first preferred making method when the optical recording medium to be analyzed includes a dielectric layer has not been elucidated yet, the inventors considers that one of factors thereof is as follows. However, the factors are not limited thereto.

Recently developed optical recording media such as phase change optical disk and magneto-optical disk are provided with functional layers such as dielectric layers which are hard to dissolve completely even with very strong acids such as hydrofluoric acid. For directly analyzing the laminate-side surface of the substrate in such an optical recording medium provided with a dielectric layer, the part to be analyzed in the above-mentioned surface of the substrate must be exposed completely.

In the conventional method, however, the dielectric layer disposed on the surface of the substrate is hard to remove completely by dissolving even when a strong acid is used, and is hard to remove by peeling with an adhesive tape or etching, thereby partly remaining in the part of the substrate surface to be analyzed. The grooves or roughness of the substrate surface seems to form irregularities on the order of several nanometers to several micrometers, so that the state of the substrate surface cannot be analyzed sufficiently accurately with a high precision even if the dielectric layer slightly remains on the substrate surface.

When the method of making an optical recording medium sample is employed for an optical recording medium provided with a dielectric layer, by contrast, the resulting optical recording medium sample is in a state where the contact surface of the dielectric layer with the substrate is exposed. The substrate of the optical recording medium is required to transmit reproducing or recording light therethrough, so that constituent materials for such a substrate are materials which can be removed by dissolving more easily than materials used in the dielectric layer, whereby no constituent materials for the substrate remain in the part to be analyzed in the contact surface of the dielectric layer with the substrate.

The inventors have also found that profiles such as grooves, lands, and surface roughness of the surface of the substrate on the dielectric layer side are sufficiently accurately transferred with a high precision to the contact surface of the dielectric layer with the substrate. As a consequence, the state of the substrate surface can effectively be grasped when analyzing the surface of the dielectric layer without directly analyzing the form of the substrate surface.

As mentioned above, it has been necessary for the conventional method of making an optical recording medium sample to remove a plurality of layers formed on the substrate. Further, appropriate removing means must be employed for the individual layers depending on materials constituting the layers, whereas conditions of apparatus employed as the means, species of liquids used in the method, etc. must be changed as appropriate even when using the same removing means.

On the other hand, the method of making an optical recording medium sample in accordance with the present invention is only required to remove the substrate and thus tends to be able to reduce the time, labor, and cost as compared with the conventional method.

In the above-mentioned first preferred making method, it will be preferred if the substrate removing step removes a part of the substrate so as to expose a part of the contact surface of the dielectric layer with the substrate. When a part of the substrate is removed so as to expose a part of the contact surface of the dielectric layer with the substrate, the substrate left without being removed supports the optical recording medium sample. This makes the optical recording medium sample hard to curve or hard to soften, so that the surface form of the contact surface of the dielectric layer can be held stably, whereby an optical recording medium sample which enables more accurate analyses with a higher precision can be obtained.

In the above-mentioned first preferred making method, it will be preferred if the substrate removing step dissolves the substrate by using a liquid adapted to dissolve the substrate selectively without dissolving the dielectric layer, so as to expose the contact surface of the dielectric layer with the substrate. This can easily and reliably expose the contact surface of the dielectric layer to which the surface form of the substrate is transferred, whereby an optical recording medium sample for grasping the surface state of the substrate accurately with a high precision can be obtained effectively.

In the above-mentioned first preferred making method, it will be preferred if the substrate removing step exposes the contact surface of the dielectric layer with the substrate by using so-called "dripping dissolution", in which the optical recording medium is arranged such that the surface of the substrate opposite from the dielectric layer faces up, and the liquid is dripped on this surface so as to dissolve a predetermined part of the substrate. The "dripping dissolution" can simplify the apparatus configuration and the operation of making, while being less likely to damage the optical recording medium, whereby the aimed optical recording medium sample is more likely to be obtained efficiently and reliably.

In the above-mentioned first preferred making method, it will be preferred if the substrate removing step arranges the optical recording medium obliquely such that the surface of the substrate opposite from the dielectric layer faces up and forms a predetermined angle with a horizontal direction, and drips the liquid onto the surface of the substrate opposite from the dielectric layer. This allows both of the dripped liquid and the substrate material dissolved by the liquid to flow down along the substrate surface, so that there is no need to provide a step of newly removing them from the optical recording medium sample, whereby the resulting optical recording medium sample is more likely to be subjected to analyses rapidly.

In the above-mentioned first preferred making method, it will be preferred if a constituent material of the substrate is a polycarbonate resin, a constituent material of the dielectric layer is a dielectric oxide or dielectric nitride, and the liquid is a liquid containing a polar solvent as a main ingredient. When the combination of the liquid and the constituent material of the substrate, and the constituent material of the dielectric layer is as mentioned above, the optical recording medium sample can be obtained more easily, whereby the time, labor, and cost are likely to be reduced further. From such a viewpoint, it will be more preferred if the dielectric layer includes a constituent material selected from the group consisting of ZnS-SiO2, SiCO, CeO2, SiN, and A1N, and the liquid is a liquid containing an organic solvent selected from the group consisting of chloroform, dichloromethane, THF, acetone, and methylethylketone as a main ingredient. It will also be preferred if a so-called chlorine-based solvent such as chloroform or dichloromethane is used as the liquid.

When the optical recording medium to be analyzed is an optical recording medium (i.e., optical recording medium provided with no dielectric layer) comprising a substrate and an organic colorant layer (recording layer) formed on one side of the substrate, it will be preferred if the laminate preparing step comprises an organic colorant layer removing step of removing the organic colorant layer from the optical recording medium, and a support layer forming step of yielding an intermediate sample by forming a support layer on the side of the substrate having the organic colorant layer removed therefrom, whereas the substrate removing step is a step of removing a predetermined part of the substrate from the intermediate sample. The method of the present invention having this configuration will be referred to as "second preferred making method" in the following for convenience.

Studies conducted by the inventors have elucidated that, when the conventional method of making an optical recording medium sample is employed for an optical recording medium in which a substrate and an organic colorant layer are formed adjacent to each other, a layer which is not supposed to have existed when an optical recording medium is made remains on the substrate surface exposed by removing individual layers. The layer (hereinafter referred to as "middle layer") remaining on the substrate surface as such seems to be generated when the optical recording medium is irradiated with pumping light such as a laser beam at the time of recording information thereon. Though a difference in the composition of the middle layer from that of the substrate can be seen.at present, the middle layer itself is such a fine layer that its structure, composition, mechanical property, electrical property, chemical property, etc. cannot be measured/analyzed accurately. Therefore, it has been considered very difficult to remove the middle layer while keeping the surface state of the substrate at present.

When the above-mentioned second preferred making method is used, by contrast, the middle layer itself is not required to be removed, whereby it is not necessary to grasp various physical properties of the middle layer mentioned above. Also, the surface form of the substrate is accurately transferred with a high precision onto the surface of the optical recording medium sample exposed by removing the substrate, whereby the surface state of the substrate can be grasped when the surface of thus obtained optical recording medium sample is analyzed.

When recording information by irradiating an optical recording medium with pumping light such as a laser beam in particular, irregularities finer than the depth of grooves and the like are generated in the substrate surface of a pit area obtained by irradiation with such pumping light. Even such fine irregularities generated in the pit area can be transferred accurately with a high precision to the optical recording medium sample obtained by the present invention.

When the optical recording medium contains a phthalocyanine compound as an organic colorant layer, the middle layer is relatively easy to occur, whereby the above-mentioned effects of the above-mentioned second preferred making method can be exhibited more.

In the above-mentioned second preferred making method, it will be preferred if the organic colorant layer removing step dissolves the organic colorant layer away, since the organic colorant layer is likely to be removed effectively and reliably thereby, and more preferred if the organic colorant layer is dissolved away with chloroform. Since chloroform does not exhibit solubility to the middle layer, the part of the substrate laminated with the middle layer is not dissolved, whereby at least the surface state of this substrate part can be grasped.

In the above-mentioned second preferred making method, it will be preferred if the organic colorant layer removing step dissolves the organic colorant layer away with a liquid adapted to dissolve the organic colorant layer selectively without dissolving the substrate, since the organic colorant layer can be removed more easily and reliably thereby while keeping the surface form of the substrate. As such a liquid, ethanol and/or isopropyl alcohol can be used preferably.

In the above-mentioned second preferred making method, it will be preferred if the support layer contains a dielectric material from the viewpoints of easiness in forming the film, the substrate being relatively easily removable alone in the substrate removing step, easiness in observing the optical recording medium sample, etc. It will be preferred if the support layer contains a layer formed by vapor deposition, since the surface form of the substrate can be transferred accurately with a higher precision thereby.

It will be preferred if the support layer includes a hard coating layer, since this reduces the distortion and flexure of the optical recording medium sample, whereby the surface form of the substrate can be kept more.

In the above-mentioned second preferred making method, it will be preferred if the substrate removing step employs a method of dissolving the substrate away, since the substrate can be more selectively removed alone while keeping the substrate layer and middle layer. If no support layer is provided at the time of dissolving the substrate away, the middle layer will tend to be peeled off by the liquid used for dissolving. Therefore, when the method of dissolving the substrate away is employed, the substrate surface form can be transferred more favorably if the support layer is provided. If the support layer is formed from the above-mentioned one side of the organic colorant layer without removing the organic colorant layer, the organic colorant layer will be likely to peel off at the time when dissolving the substrate away, thereby losing information about the surface form of the substrate. Therefore, when a method of dissolving the substrate away is employed, an optical recording medium sample to which the surface form of the substrate is transferred more accurately can be obtained more reliably if the support layer is provided after removing the organic colorant layer.

It will be preferred if the substrate removing step dissolves the substrate away with chloroform, since the substrate can be removed alone more selectively thereby without dissolving the middle layer and support layer.

In the above-mentioned second preferred making method, it will be preferred if the substrate removing step dissolves a predetermined part of the substrate away by using so-called "dripping dissolution", in which the intermediate sample is arranged such that the surface of the substrate opposite from the organic colorant layer faces up, and a liquid adapted to dissolve the substrate is dripped on the surface so as to dissolve a predetermined part of the substrate. The "dripping dissolution" can simplify the apparatus configuration and the operation of making, while being less likely to damage the support layer and the middle layer, whereby the aimed optical recording medium sample is more likely to be obtained efficiently and reliably.

In the above-mentioned second preferred making method, it will be preferred if the substrate removing step arranges the intermediate sample obliquely such that the surface of the substrate opposite from the support layer faces up and forms a predetermined angle with a horizontal direction, and drips the liquid onto the surface of the substrate opposite from the support layer. Employing such a method allows both of the dripped liquid and the substrate material dissolved by the liquid to flow down along the substrate surface, so that there is no need to provide a step of newly removing them from the optical recording material, whereby the resulting optical recording medium sample is more likely to be subjected to analyses rapidly.

The above-mentioned second preferred making method is preferred when the optical recording medium comprises a substrate containing a polycarbonate resin.

A particularly preferred mode of the above-mentioned second preferred making method comprises a step of preparing an optical recording medium comprising a substrate containing a polycarbonate resin; an organic colorant layer, formed on one side of the substrate, containing a phthalocyanine compound; and a middle layer disposed between the substrate and organic colorant layer and formed by irradiating the optical recording medium with pumping light; a step of dissolving the organic colorant layer away from the optical recording medium with at least one species of solvent selected from the group consisting of chloroform, ethanol, and isopropyl alcohol; a step of forming a support layer containing a dielectric material by vapor deposition on the side of the substrate having removed the organic colorant layer therefrom, so as to yield an intermediate sample; and a substrate removing step of arranging the intermediate sample obliquely such that the surface of the substrate opposite from the support layer faces up and forms a predetermined angle with a horizontal direction, and dripping an aqueous chloroform solution onto the surface of the substrate opposite from the support layer, so as to dissolve the substrate away.

The method of analyzing an optical recording medium sample in accordance with the present invention comprises an optical recording medium sample preparing step of removing a predetermined part of a substrate used for an optical recording medium from a laminate comprising the substrate and a functional layer formed adjacent to one side of the substrate, so as to prepare an optical recording medium sample exposing a contact surface of the functional layer with the substrate; and an analyzing step of analyzing the exposed contact surface. This can grasp the form of the substrate surface sufficiently accurately with a high precision in particular. Therefore, when results obtained by this analyzing method are utilized for the quality control of the optical recording medium, optical recording media can be manufactured with a higher yield.

In conformity to the above-mentioned first preferred making method, the method of analyzing an optical recording medium sample in accordance with the present invention can use, as the laminate, a laminate comprising a substrate used for an optical recording medium and a dielectric layer formed adjacent to one side of the substrate.

In conformity to the above-mentioned second preferred making method, the method of analyzing an optical recording medium sample in accordance with the present invention can use, as the laminate, an intermediate sample obtained by removing an organic colorant layer from a laminate comprising a substrate and the organic colorant layer formed adjacent to one side of the substrate and forming a support layer on the surface of the substrate having the organic colorant layer removed therefrom.

The apparatus for making an optical recording medium in accordance with the present invention comprises a medium holding part for holding a laminate comprising a substrate and a functional layer formed on one surface of the substrate such that the surface of the substrate opposite from the functional layer faces up; and a dripping part for dripping a liquid adapted to dissolve the substrate selectively without dissolving the functional layer onto the surface of the substrate opposite from the functional layer.

Such an apparatus for making an optical recording medium sample can effectively realize the above-mentioned method of making an optical recording medium sample and method of analyzing the sample in accordance with the present invention.

In the above-mentioned apparatus for making an optical recording medium sample in accordance with the present invention, it will be preferred if the medium holding part holds the optical recording medium obliquely such that the surface of the substrate opposite from the functional layer forms a predetermined angle with a horizontal direction, since the time for making the optical recording medium sample is likely to be shortened thereby.

A first method of manufacturing an optical recording medium in accordance with the present invention employs the above-mentioned first preferred making method, and comprises a step of successively forming at least a dielectric layer, a recording layer, and a reflecting layer on one side of a substrate so as to yield an optical recording medium; a step of preparing a laminate comprising the substrate and dielectric layer, and removing a predetermined part of the substrate from the laminate so as to expose a contact surface of the dielectric layer with the substrate and yield an optical recording medium sample; and a quality control step of analyzing the contact surface of the optical recording medium sample exposed by removing the predetermined part of the substrate.

A second method of manufacturing an optical recording medium in accordance with the present invention employs the above-mentioned second preferred making method, and comprises a step of successively forming at least an organic colorant layer and a reflecting layer on one side of a substrate so as to yield an optical recording medium; a step of preparing a laminate comprising the substrate and organic colorant layer, removing the organic colorant layer from the optical recording medium, forming a support layer on the side of the substrate having the organic colorant layer removed therefrom, so as to yield an intermediate sample, and removing a predetermined part of the substrate of the intermediate sample so as to yield an optical recording medium sample; and a quality control step of analyzing the surface of the optical recording medium sample exposed by removing the predetermined part of the substrate.

The first and second methods of manufacturing an optical recording medium in accordance with the present invention can compare and study a correlation between a manufacturing condition and a substrate surface state in more detail than in the conventional manufacturing method, whereby the yield of optical recording medium products can be improved. In this case, the above-mentioned first and second manufacturing methods may further comprise a step of adjusting the manufacturing condition of the optical recording medium according to an analysis result of the quality control step.

### Effect of the Invention

The present invention can provide a method of making an optical recording medium sample, a method of analyzing an optical recording medium sample, and an apparatus for making an optical recording medium sample, which can analyze the surface state of a substrate of an optical recording medium sufficiently accurately with a high precision. The methods of manufacturing an optical recording medium in accordance with the present invention can improve the yield of optical recording medium products more fully than conventionally available.

### Brief Description of the Drawings

[Fig. 1]Fig. 1 is a partly broken perspective view showing an example of optical disk used in the method of making an optical recording medium sample in accordance with the present invention;
[Fig. 2]Fig. 2 is an enlarged perspective view of a partial region represented by R in the cross section of the optical disk shown in Fig. 1;
[Fig. 3]Fig. 3 is a schematic perspective view showing a preferred embodiment of the apparatus for making an optical recording medium sample in accordance with the present invention;
[Fig. 4]Fig. 4 is a partly broken perspective view showing an example of optical disk used in the method of making an optical recording medium sample in accordance with the present invention;
[Fig. 5] Fig. 5 is an enlarged perspective view of a partial region represented by R in the cross section of the optical disk shown in Fig. 4;
[Fig. 6] Fig. 6 is a schematic perspective view showing a preferred embodiment of the apparatus for making an optical recording medium sample in accordance with the present invention;
[Fig. 7]Fig. 7 is a partly enlarged perspective view showing an example of intermediate sample obtained in a stage in the middle of the method of making an optical recording medium sample in accordance with the present invention;
[Fig. 8]Fig. 8 is a partly enlarged perspective view showing an example of optical recording medium sample obtained by the method of making an optical recording medium sample in accordance with the present invention;
[Fig. 9]Fig. 9 is an AFM image of a DVD-RW substrate;
[Fig. 10] Fig. 10 is an AFM image of the optical disk sample in accordance with an example;
[Fig. 11] Fig. 11 is an SEM image of the optical disk sample in accordance with a comparative example;
[Fig. 12] Fig. 12 is an AFM image of the optical disk sample in accordance with a comparative example;
[Fig. 13] Fig. 13 is an AFM profile of the DVD-RW substrate;
[Fig. 14] Fig. 14 is an AFM profile of the optical disk sample in accordance with an example;
[Fig. 15] Fig. 15 is an AFM profile of the optical disk sample in accordance with a comparative example;
[Fig. 16] Fig. 16 is an AFM image of the optical disk sample in accordance with an example;
[Fig. 17] Fig. 17 is an AFM profile of the optical disk sample in accordance with a comparative example;
[Fig. 18] Fig. 18 is a schematic plan view showing a major part of the optical disk formed with pits in accordance with an example;
[Fig. 19] Fig. 19 is a schematic end face view showing a major part of the end face of the optical disk taken along the line I-I of Fig. 18; and
[Fig. 20] Fig. 20 is a schematic end face view showing a major part of the end face of the optical disk taken along the line II-II of Fig. 18.

### Explanations of Numerals

50...making apparatus; 60...dripping member; 62...container part; 64...nozzle part; 66...valve part; 70...medium holding member; 72...support table; 74...shaft; 76...liquid collecting part; 80...stand.

### Best Modes for Carrying Out the Invention

In the following, with reference to the drawings as necessary, preferred embodiments of the present invention will be explained in detail, though the present invention is not restricted thereto. In the drawings, constituents identical to each other will be referred to with numerals identical to each other without repeating their overlapping descriptions. Positional relationships such as upper, lower, left, and right are based on those depicted unless otherwise specified. Ratios of dimensions in the drawings are not limited to those depicted.

First, as a first embodiment of the present invention, preferred embodiments of the method and apparatus for making an optical recording medium sample, the method of analyzing the sample, and the method of manufacturing an optical recording medium in the case where the subject to be analyzed is an optical recording medium including a dielectric layer will be explained in detail in the following.

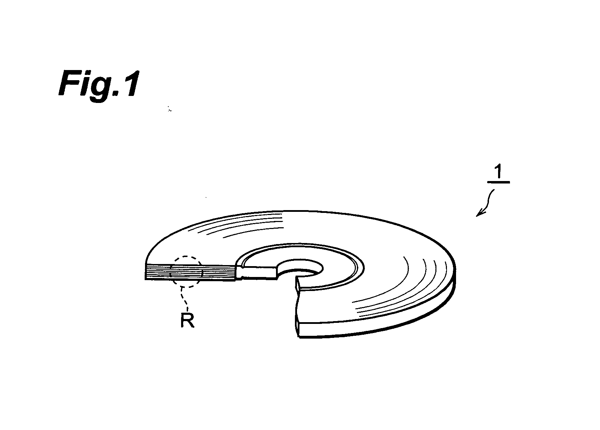

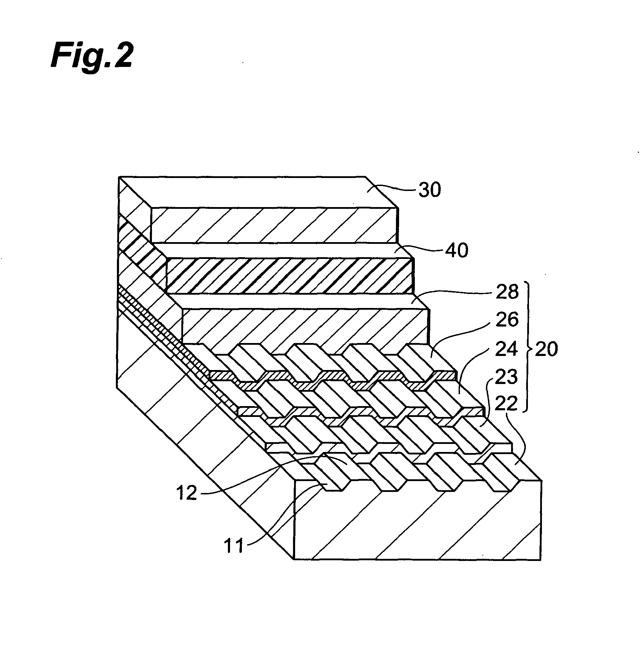

Fig. 1 is a partly broken perspective view showing an example of optical disk (DVD-RW) as an optical recording medium in accordance with the first embodiment of the present invention. Fig. 2 is an enlarged perspective view of a partial region represented by R in the cross section of the optical disk 1 shown in Fig. 1, which is a DVD-RW.

As shown in Fig. 2, the optical disk 1 shown in Fig. 1 is constituted by a disk 20 used for recording and a dummy substrate 30 which are bonded together with an adhesive layer 40 interposed therebetween. The disk 20 is constituted by a substrate 22, a protective layer 28, a recording layer 24 disposed between the substrate 22 and protective layer 28, a reflecting layer 26 disposed between the protective layer 28 and recording layer 24, and a dielectric layer 23 disposed between the substrate 22 and recording layer-24. In other words, it is constructed by laminating the dielectric layer 23, recording layer 24, reflecting layer 26, and protective layer 28 on the substrate 22 successively from the substrate 22 side.

The material constituting the substrate 22 is not restricted in particular as long as it is a material which can support the above-mentioned layers and transmit therethrough recording light and reproducing light. As such a constituent material, glass or resins can be used, for example. In particular, resins are preferably used from the viewpoint of easiness in formability.

Examples of such resins include polycarbonate resins, acrylic resins, epoxy resins, polystyrene resins, polyethylene resins, polypropylene resins, and urethane resins. In particular, polycarbonate resins are preferably used because of their processability, optical characteristics, etc.

The surface of the substrate 22 on the side formed with the recording layer 24 is formed with grooves (depressions) 11 and lands (projections) 12 for a tracking servo necessary for recording information. The form of this guiding groove structure, the depth of the grooves, and the track pitch are optimized in view of the total signal quality including recording/reproducing characteristics, servo signal characteristics, etc.

The dielectric layer 23 is a layer for protecting the recording layer 24 against causes of deterioration such as corrosion. As a material constituting the dielectric layer 23, a dielectric material containing a dielectric oxide such as ZnS-SiO2, SiCO, or CeO2 or oxygen, a dielectric nitride such as SiN or AIN, or the like is used, among which ZnS-SiO2 is preferably used from the viewpoint of attaining a favorable waterproofness or an appropriate refractive index. The dielectric layer 23 may be a plurality of layers made of respective constituent materials different from each other, and may be a plurality of layers made of the same constituent material with different composition ratios.

While the recording layer 24 is not an essential constituent of the optical recording medium sample in accordance with this embodiment and thus will not be explained in detail here, the configuration of the recording layer 24 is not restricted in particular and can be made similar to that of the recording layer 24 in the optical recording medium 201 in accordance with a second embodiment of the present invention which will be explained later, for example.

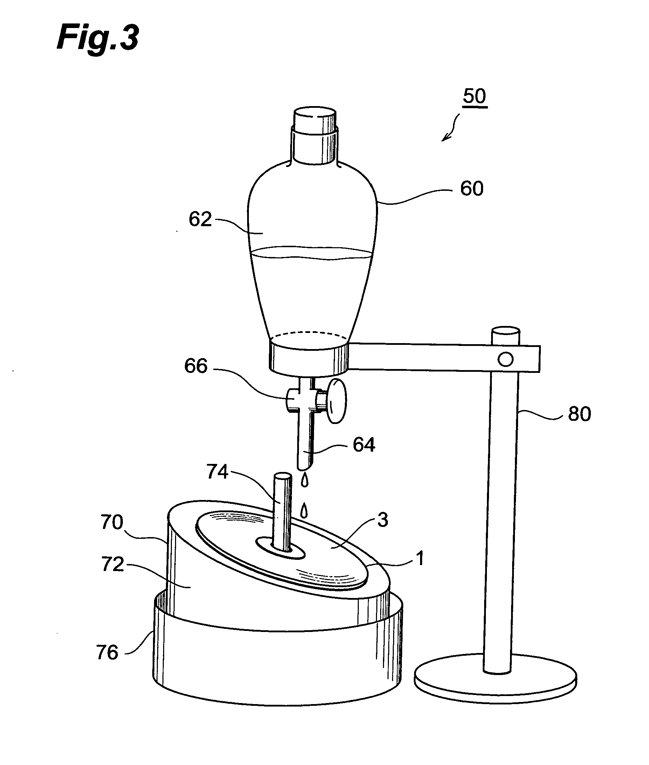

Next, an apparatus for making an optical recording medium sample (hereinafter simply referred to as "making apparatus" as the case may be) in accordance with the first embodiment of the present invention will be explained. Fig. 3 is a schematic perspective view of the making apparatus. This making apparatus 50 is mainly composed of a dipping part 60 and a medium holding part 70.

The dripping part 60 comprises a container part 62, a nozzle part 64, and a valve part 66. The container part 62 is used for storing therein a liquid adapted to dissolve the substrate 22 selectively without dissolving the dielectric layer 23 of the optical disk 1. The nozzle part 64, which forms an opening and communicates with the container part 62, is provided in order to function such that the liquid delivered from the container part 62 drips from the opening. The valve part 66 is disposed between the container part 62 and the nozzle part 64. Opening and closing the valve part 66 can start and stop dripping the liquid and adjust the dripping rate.

In order to drip the liquid onto the optical disk 1 held by the medium holding part 70, which will be explained later, it is necessary for the dripping part 60 to position the nozzle part 64 higher than the optical disk 1. Therefore, the dripping part 60 is usually held by a stand 80 or the like such that the nozzle part 64 can be disposed higher than the optical disk 1.

The medium holding part 70 comprises a support table 72, a shaft 74, and a liquid collecting part 76. The support table 72 is provided in order to support an exposed surface 3 (the surface on the substrate 22 side) of the optical disk 1 in a state tilted by a predetermined angle with a horizontal direction (hereinafter referred to as "tilted state"). The shaft 74 is disposed so as to extend upward from the upper face of support table 72. The shaft 74 is inserted through the center opening of the optical disk 1 in order to prevent the optical disk 1 placed on the support table 72 in the tilted state from slipping off the upper face of the support table 72. The liquid collecting part 76 is provided for collecting the liquid dripped from the dripping part and substances dissolved by the liquid. Therefore, a gap is formed between the outer periphery of the support table 72 and the inner periphery of the liquid collecting part 76 so as to be able to collect the liquid and the like.

The dripping part 60 and the medium holding part 70 are arranged such that the liquid dripped from the dripping part 60 flows down radially outward from the surroundings of the center opening of the optical disk 1. Such an arrangement is likely to make it possible to attain information items concerning surface states such as grooves 11, lands 12, and surface roughness in individual regions formed in the substrate 22 of the optical disk 1 from a lead-in region (tracking region) to a lead-out region by way of a recording region (data region) all at once. From such a viewpoint, the dripping part 60 and the medium holding part 70 may be arranged such that the liquid from the dripping part 60 drips onto the outer peripheral end part located at the highest position in the optical disk 1 in a tilted state. In this case, information items concerning states of individual regions formed in the substrate 22 of the optical disk 1 from the lead-out region to the lead-in region by way of the recording region are likely to be obtained. Fig. 3 shows a state where the optical disk 1 is disposed at the medium holding part 70, while the liquid is injected to the dripping part 60.

The method of making an optical recording medium sample in accordance with the first embodiment of the present invention will now be explained. The method of making an optical recording medium sample in accordance with this embodiment is carried out by using the above-mentioned making apparatus 50 as follows, for example.

First, the optical disk 1 is prepared. The optical disk 1 is a DVD-RW in this embodiment, but may be a read-only optical disk such as CD or DVD, a recordable optical disk such as CD-R or DVD-R, a rewritable disk of other types such as CD-RW, an optical disk for high-density recording such as Blu-ray disks, or a magneto-optical disk. Instead of an optical disk which is a final product, an intermediate product obtained immediately after forming the dielectric layer 23 on the substrate 22 or the like may be used for making the optical recording medium sample.

Subsequently, thus prepared optical disk 1 is placed on the support table 72 such that the substrate 22 faces up (toward the nozzle part 64 of the dripping part 60) while the shaft 74 is inserted through the center opening of the optical disk 1 (optical disk placing step). Here, the upper face of the support table 72 is tilted by a predetermined angle with respect to a horizontal direction, whereby thus set optical disk 1 is in the tilted state as well.

A predetermined angle of inclination is determined by how a liquid, which will be explained later, dripped on the optical disk 1 and the material of the substrate 22 (hereinafter referred to as "substrate material") dissolved by the liquid flow down, but may be changed as appropriate in order to adjust how they flow down. Namely, when they flow down too fast, the amount of dissolved substrate material with respect to the amount of dripped liquid, i.e., the dissolving efficiency of the substrate material, tends to decrease. When they flow down too slowly, it tends to take too much time, and parts not desired to be dissolved in the substrate 22 are likely to be dissolved. The angle of inclination may be adjusted either before or during a substrate dissolving step which will be explained later. The angle of inclination may be adjusted by appropriately choosing/exchanging a plurality of medium holding parts 70 having respective upper face inclination angles different from each other, or using a mechanism for adjusting the upper face inclination angle provided with the medium holding part 70 beforehand.

Next, an appropriate amount of a liquid is injected into the container part 62 of the dripping part 60 so as to be prepared (liquid preparing step). Selected as the liquid is one which can dissolve the substrate 22 of the optical disk 1 without dissolving the dielectric layer 23 of the optical disk 1. For example, when the constituent material of the substrate 22 is a polycarbonate resin while the constituent material of the dielectric layer 23 is one in which SiO2 is doped with an oxygen getter which prevents oxygen from being isolated, such as ZnS-SiO2, the liquid is preferably an alcohol, a fluorine alcohol, a petroleum-based solvent, or an organic solvent other than cellosolve, which does not dissolve the polycarbonate resin, whereby examples of the liquid include chloroform, THF, acetone, and MEK.

Among them, it will be more preferable if a chlorine-based solvent (chloroform, dichloromethane, or the like) other than carbon tetrachloride is used. Such a chlorine-based solvent tends to dissolve the polycarbonate resin relatively rapidly and further restrain the surface form of the dielectric layer 23 from breaking.

Reasons why the use of such a liquid is likely to further restrain the surface form of the dielectric layer 23 from breaking have not been elucidated in detail at present, but the inventors consider that one of the reasons is as follows. When a resin material such as polycarbonate resin is used as a material for the substrate 22, if a liquid which dissolves the resin relatively moderately is chosen, the liquid seems to dissolve and swell the resin of the substrate 22. In some cases, the dielectric layer 23 seems to break because of the swelling of the resin. If a liquid which dissolves the resin relatively rapidly is used, on the other hand, it seems that the surface form of the dielectric layer tends to be further restrained from breaking, since the resin is hard to swell. The reasons are not restricted to those mentioned above, however.

Next, the above-mentioned liquid is dripped from the nozzle part 64 of the dripping part 60 to the substrate 22 of the optical disk 1, so as to dissolve the substrate 22, thereby exposing the contact surface of the dielectric layer 23 with the substrate 22 (substrate dissolving step). The liquid dripping rate at that time can be appropriately adjusted by using the valve part 66 depending on the dissolving efficiency, time, and parts desired to be dissolved, which may be carried out together with the above-mentioned adjustment of the upper face inclination angle of the medium holding part 70. Though the liquid flows down when the dripping rate becomes higher, this will also be referred to as "dripping" in this specification.

Though the position where the liquid drips on the optical disk 1 (hereinafter referred to as "dripping position") is not restricted in particular as long as the substrate 22 of the optical disk 1 can be dissolved, it will be preferred if the liquid from the dripping part 60 drips on the surroundings of the center opening of the optical disk 1. The liquid dripped on the surroundings of the center opening flows down radially outward therefrom, whereby the parts corresponding to the individual regions from the lead-in region to the lead-out region by way of the recording region in the substrate 22 are likely to be dissolved all at once. As a consequence, information items of respective surface states of the substrate in these regions are likely to be obtained all at once.

From the same viewpoint, it will be preferred if the liquid from the dripping part 60 drips on the outer peripheral end part at the highest position in the optical disk 1 in the tilted state. The liquid dripped on this part is likely to dissolve the parts of the substrate corresponding to the individual regions from the lead-out region near the outer peripheral end part to the lead-in region by way of the recording region all at once.

In the substrate dissolving step, it will be preferred if the liquid is dripped so as to dissolve only a part of the substrate 22. For completely dissolving the substrate 22 away, the substrate dissolving step tends to take a longer time. Also, the optical recording medium sample obtained by completely dissolving the substrate away has flexibility and is likely to change its form, and thus tends to be harder to handle and less suitable to analyze the surface form of the dielectric layer 23 and the like. From such viewpoints and a viewpoint of attaining necessary information, it will be more preferred if the liquid is dripped so as to dissolve a part of the substrate not exceeding 1/3 of the substrate area. However, depending on conditions such as the method of holding the sample, the substrate may be dissolved in excess of the above-mentioned area.

When dripping the liquid, it will be preferred if the substrate dissolving step is carried out while the dripping position is kept at substantially the same position. This tends to save the time and labor of the substrate dissolving step more. It will be more preferable if the liquid is dripped at substantially the same position near the center opening of the optical disk 1 or in the highest outer peripheral end part thereof while the optical disk 1 is tilted, since particularly necessary information is likely to be obtained thereby while saving the time and labor.

When the optical disk 1 is tilted while the liquid dripping position is kept at substantially the same position near the center opening of the optical disk 1 or in the highest outer peripheral end part thereof as mentioned above, only a limited radial region of the substrate 22 is likely to be dissolved selectively. This is preferred in particular, since particularly necessary information is likely to be obtained while saving the time and labor, and the surface form of the dielectric layer 23 is likely to be kept.

The optical disk 1 having dissolved the substrate 22 away is washed with ethanol or the like as necessary, whereby an optical disk sample as an optical recording medium sample is obtained.

Though the method of making an optical recording medium sample in accordance with the first embodiment of the present invention explained in the foregoing dissolves the substrate 22 away, various analyses to be conducted later can analyze the surface state of the substrate 22 of the optical disk sufficiently accurately with a high precision. Though no reasons therefor have been elucidated at present, the inventors consider that one of the reasons therefor is as follows. However, the reasons are not limited thereto.

For directly analyzing the surface of the substrate 22 on the dielectric layer 23 side in the optical disk 1 mentioned above, it is necessary that the part of the above-mentioned surface of the substrate 22 to be analyzed be exposed completely. When the dielectric layer 23 disposed on the surface of the substrate 22 is to be removed by conventional methods, the dielectric layer is hard to remove completely by dissolving even when a strong acid is used, and is hard to remove by peeling with an adhesive tape or etching, thereby partly remaining in the part of the surface of the substrate 22 to be analyzed. The grooves, lands, or roughness of the substrate surface seems to form irregularities on the order of several nanometers to several micrometers, so that the state of the substrate surface cannot be analyzed sufficiently accurately with a high precision even if the dielectric layer 23 slightly remains on the substrate surface 22.

When the method of making an optical recording medium sample in accordance with this embodiment is used, on the other hand, the resulting optical disk sample is in a state where the contact surface of the dielectric layer 23 with the substrate 22 is exposed. It is necessary for the substrate 22 of the optical disk 1 to transmit therethrough reproducing or recording light, and the constituent material of such a substrate 22 is a material which can be dissolved away more easily than the material used in the dielectric layer 23, whereby no substrate material remains in the part to be analyzed in the contact surface of the dielectric layer 23 with the substrate 22.

It is also found that profiles such as grooves, lands, and surface roughness of the surface of the substrate 22 on the dielectric layer side are sufficiently accurately transferred with a high precision to the contact surface of the dielectric layer 23 with the substrate 22. Therefore, the surface state of the substrate 22 can be grasped effectively when the surface of the dielectric layer 23 is analyzed without directly analyzing the surface state of the substrate 22.

It has been necessary for the conventional method of making an optical recording medium sample to remove a plurality of layers such as the dielectric layer 23 formed on the substrate 22. For the individual layers, suitable removing means must be employed depending on materials constituting the layers. Also, even in the same means, conditions of the apparatus used as the means, species of the liquid used in this method, etc. must be changed as appropriate. Further, a layer using a material which is relatively hard to dissolve, such as the dielectric layer 23, can be dissolved only with a strong acid such as hydrofluoric acid, which must be handled with care.

On the other hand, the method of making an optical recording medium sample in accordance with the present invention is required to remove the substrate 22 alone, and thus tends to reduce the time, labor, and cost as compared with the conventional method. Further, the constituent material of the substrate 22 is easier to dissolve away than the dielectric layer 23 and the like, whereby the liquid can be handled with less care than in the conventional method.

Though the constituent material of the substrate 22 in the optical disk 1 is a polycarbonate resin while the optical disk 1 comprises the dielectric layer 23 in the first embodiment, the method of making an optical recording medium sample in accordance with the present invention is not limited to this combination. When the optical disk 1 comprises the substrate 22 constituted by a material other than the polycarbonate resin, and a functional layer made of a material other than a dielectric instead of the dielectric layer 23, for example, the method of making an optical recording medium sample in accordance with the present invention can be carried out if a solvent (liquid) adapted to dissolve the substrate 22 selectively without dissolving such a functional layer is chosen.

Examples of such an optical disk 1 include Blu-ray disks which have been under study as optical recording media for high-density recording. Among the Blu-ray disks, recordable Blu-ray disk media use not only a polycarbonate resin but also, for example, amorphous polyolefins, polylactic acid acrylic, etc. as a constituent material of the substrate 22. As a functional layer, a recording layer such as Ag-In-Sb-Te-Ge-based film, Tb-Sb-Te-Ge-based film, or Te-O-Pb-based film or a reflecting layer such as Ag alloy is provided. When making a sample for observing the recording layer surface of a recordable Blu-ray disk material using polylactic acid acrylic as a constituent material of the substrate 22 and comprising a recording layer made of an Ag-In-Sb-Te-Be-based recording film as a functional layer, the optical recording medium sample can be obtained if the substrate is dissolved with an alkali solution such as an aqueous sodium hydroxide solution so as to expose the recording layer surface.

The method of analyzing an optical recording medium in accordance with the first embodiment of the present invention will now be explained. After making the above-mentioned optical disk sample, this analyzing method carries out a step (analyzing step) of analyzing thus obtained optical disk sample by using atomic-force microscopy (AEM) and/or scanning electron microscopy (SEM).

In the AFM method, the contact surface (exposed surface) of the dielectric layer 23 with the exposed substrate 22 in the optical disk sample obtained by the above-mentioned making method is directly observed with a conventional atomic-force microscope (AFM). The AFM method has a three-dimensional atomic resolution in the vertical and in-plane directions of the surface of the dielectric layer 23 to be observed, and can observe an insulator, an insulator surface in an oxidized state in particular, with a relatively high resolution, so as to be able to obtain information about the surface form of the dielectric layer 23 with a high precision on the order of nm.

Using a conventional scanning electronic microscope (SEM), the SEM method observes the exposed surface of the dielectric layer 23 of the optical disk sample obtained by the above-mentioned making method after a conductor such as metal is applied thereto by a method such as evaporation as necessary. When the SEM method is used, the surface form of the dielectric layer 23 can be observed relatively easily in a three-dimensional fashion, and the surface form on an order (on the order of µm to mm) higher than that in the above-mentioned AFM can also be observed. In some cases, without applying the conductor onto the exposed surface of the dielectric layer 23, the exposed surface can be observed by irradiating it with electron beams at a relatively low acceleration voltage or by using a current as small as possible.

Using the AFM and SEM methods in combination can yield information concerning the surface form of the dielectric layer 23 in a wider range in particular. Evaluating the surface form by combining the AFM and SEM methods makes it possible to observe a standard sample having a fine form with known dimensions and tolerances in dimensions with each of the AFM and SEM methods, measure the dimensions of the fine form, and compare their results with each other, whereby errors in measurement caused by the difference in measuring methods can be canceled out, for example. As the standard sample, a standard sample for AFM apparatus, in which a rectangular pattern is formed on an Si substrate or the like by a photolithography technique may be used, for example.
Though the apparatus for making an optical recording medium sample, method of making an optical recording medium sample, and method of analyzing an optical recording medium sample in accordance with the first embodiment of the present invention are explained in the foregoing, the apparatus for making an optical recording medium sample, method of making an optical recording medium sample, and method of analyzing an optical recording medium sample in accordance with the present invention are not limited thereto.

For example, the method of making an optical recording medium sample in accordance with another embodiment may be such that a liquid adapted to dissolve the substrate selectively without dissolving the dielectric of the optical recording medium is injected so as to be sprayed onto the optical recording medium, thereby dissolving the substrate. In this making method, as an apparatus for making the optical recording medium sample or a member equipped therewith, a conventional liquid injector such as dispenser can be used. In this case, the substrate can be dissolved either when the surface of the optical recording medium to be sprayed with the liquid is arranged parallel to the vertical direction or oriented in the gravity direction.

When the surface of the substrate on the side opposite from the dielectric layer is provided with a hard coating, the method of making an optical recording medium sample in accordance with still another embodiment may bring the liquid into contact with the substrate after removing the hard coating part by polishing with abrasive paper or the like.

The method of analyzing an optical recording medium sample in accordance with still another embodiment can use a solid surface form observation method other than the above-mentioned AFM and SEM methods, e.g., normal optical microscopy, laser microscopy, transmission electron microscopy (TEM), or energy dispersive spectrometry (EDS).

The method of analyzing an optical recording medium sample in accordance with still another embodiment may use analyzing means normally carried out under an atmospheric pressure condition such as Fourier transform infrared spectroscopy (FT-IR) or Raman spectroscopy, or analyzing means normally carried out under a reduced pressure condition such as Augier electron spectroscopy (AES) or secondary ion mass spectrometry (SIMS). Using these analyzing means can attain information concerning the chemical composition of the dielectric layer near the exposed surface.

X-ray diffractometry (XRD) can attain information concerning the solid structure of the dielectric layer, whereas X-ray fluoroscopy (XRF) can yield information concerning the composition of the dielectric layer. X-ray photoelectron spectroscopy (XPS) or ultraviolet photoelectron spectroscopy (UPS) can attain information concerning the state of combination of atoms on the exposed surface of the dielectric layer.

A sample may be collected from the exposed surface of the dielectric layer by the above-mentioned making method, and extracted by an acid, alkali, or organic solvent, or a dielectric material may be directly extracted from the surface, and thus obtained extract may be analyzed by analyzing means using inductively coupled plasma (ICP), ion chromatography (IC), liquid chromatography (LC), gas chromatography (GC), or the like.

The above-mentioned analyzing means may be used either singly or in combination of two or more. When these means are combined with sputtering or the like, information concerning the chemical composition of the optical recording medium in the thickness direction, the state of combination of atoms, etc. can also be obtained. In this case, the optical recording medium sample obtained by the making method of the present invention has been rid of the substrate, which is an insulator, from the beginning of the analysis, and thus is likely to suppress shifts in spectral peaks, decrease in intensity, and occurrence of broadening or ghost peaks caused when the insulator is charged even if AES or the like is used.

Various analyzing methods and making apparatus mentioned above can be used in the method of manufacturing an optical disk. For example, after a group (1 lot) of optical disks are manufactured, part of the optical disks may arbitrarily be extracted, and an optical disk sample may be made from thus extracted disk by using the above-mentioned making apparatus. Analyzing this optical disk sample can determine whether the group of optical disks are defective or not. Also, a group of optical disks may be inspected by the above-mentioned analyzing method, and the optical disks determined to be defective may be removed, so as to send only good optical disks to the next step. Further, a problem in the manufacturing condition of the optical disks determined to be defective may be specified, and the process of manufacturing optical disks may be improved according to this problem. Such a method of manufacturing an optical disk becomes effective means for inspecting causes of defective products manufactured, etc., and thus can contribute to keeping a high yield of optical disk products.
Therefore, the use of the above-mentioned making apparatus in the above-mentioned method of manufacturing an optical disk becomes effective means for inspecting causes of defective products manufactured, etc., and thus can contribute to keeping a high yield of optical disk products.

Next, as a second embodiment of the present invention, preferred embodiments of the method of making an optical recording medium sample when the optical recording medium has no dielectric layer, method of analyzing the sample, and method of manufacturing an optical recording medium will be explained in detail in the following.

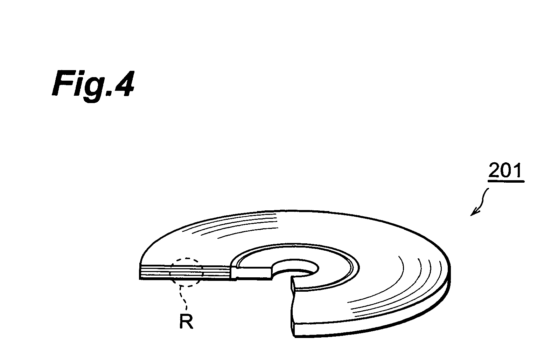

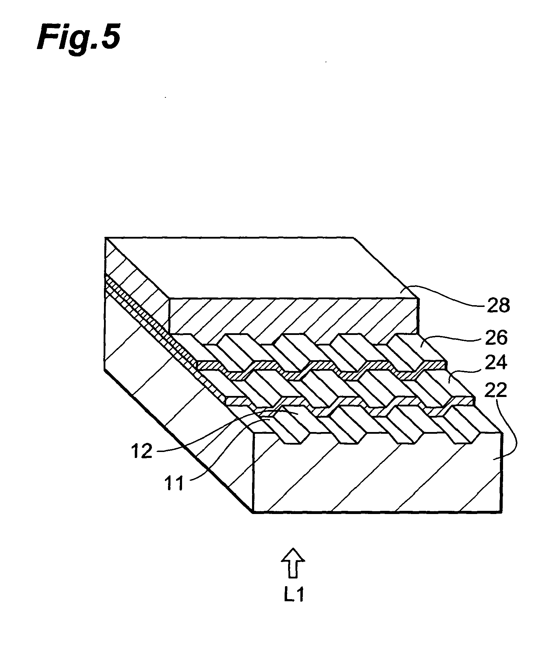

First, the optical recording medium in accordance with the second embodiment of the present invention will be explained. Fig. 4 is a partly broken perspective view showing an example of optical disk (CD-R) as the optical recording medium. Fig. 5 is an enlarged perspective view of the partial region represented by R in a cross section of the optical disk 201, which is the CD-R shown in Fig. 4.

As shown in Fig. 5, the optical disk 201 shown in Fig. 4 is constituted by a substrate 22, a protective layer 28, a recording layer (organic colorant layer) 24 disposed between the substrate 22 and protective layer 28, and a reflecting layer 26 disposed between the protective layer 28 and recording layer 24. In other words, the optical disk 201 is constructed by laminating the recording layer 24, reflecting layer 26, and protective layer 28 on the substrate 22 successively from the substrate 22 side.

In the optical disk 201, the surface of the substrate 22 on the side formed with the recording layer 24 is formed with grooves (depressions) 11 and lands (projections) 12 for a tracking servo necessary for recording information. The form of this guiding groove structure, the depth of the grooves, and the track pitch are optimized in view of the total signal quality including recording/reproducing characteristics, servo signal characteristics, etc.

The recording layer 24 is a layer which is formed with a recording mark when irradiated with pumping light such as a laser beam having a wavelength of about 780 nm in the direction of arrow L1 at the time of recording, and contains an organic colorant material. The following is the principle by which the recording mark is formed. When irradiated with pumping light for recording, the recording layer 24 absorbs the light beam and thus is heated. This heating causes the organic colorant material contained in the recording layer to decompose thermally. The thermal decomposition of the organic colorant material lowers the refractive index of the recording layer. Further, the heating accompanying the irradiation with the pumping light thermally deforms the above-mentioned substrate 22. The thermal decomposition of the organic colorant material and thermal deformation of the substrate 22 change the respective thicknesses of individual layers. The decrease in refractive index of the recording layer and the change in thickness of each layer lower the reflectance of the optical disk, whereby the part irradiated with the pumping light forms a pit.

Examples of the organic colorant material contained in the recording layer 24 include cyanine compounds, phthalocyanine compounds, and metal-containing azo compounds. Among them, an example of the phthalocyanine compounds is one represented by the following general formula (1). In formula (1), M is a metal such as Cu and Fe; and R1, R2, R3, and R4 independently refer to a hydrogen atom or monovalent organic group.

### [Chemical Formula 1]

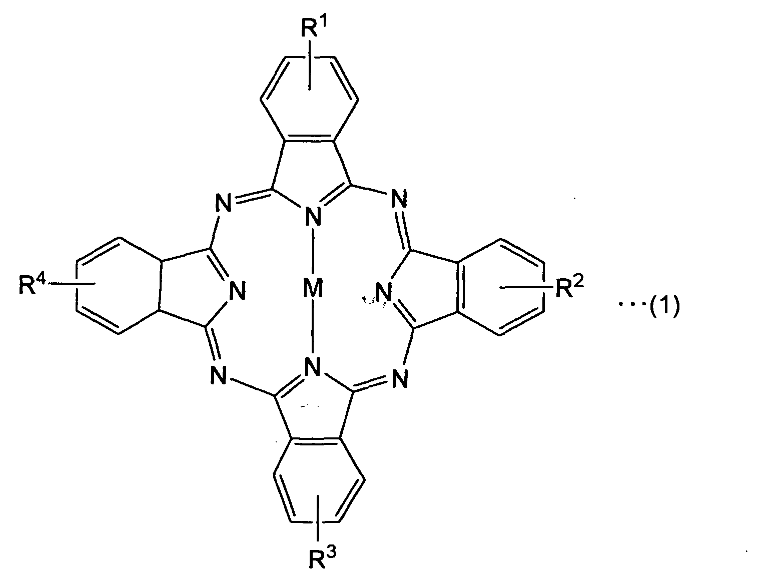

The substrate 22, reflecting layer 26, and protective layer 28 of the optical disk 201 are the same as the substrate 22, reflecting layer 26, and protective layer 28 of the optical disk 1 shown in Fig. 2 and thus will not be explained here.

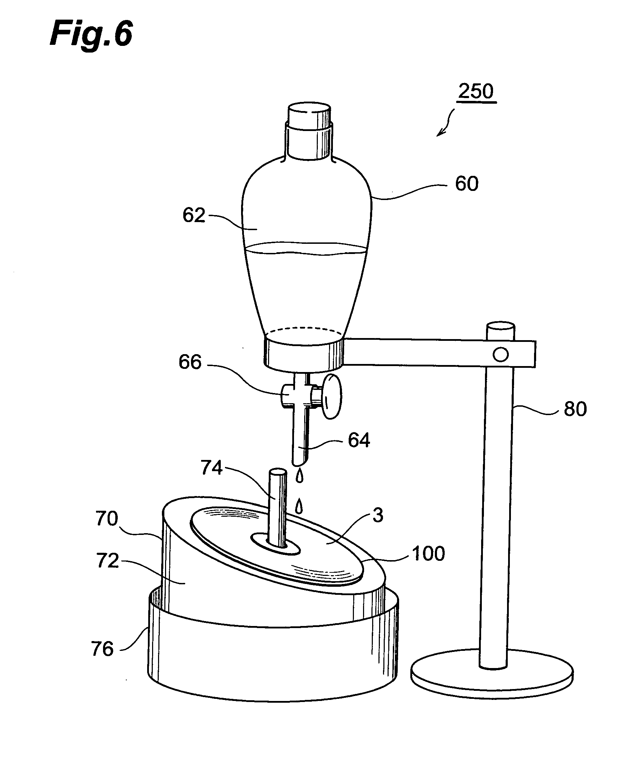

The apparatus for making an optical recording medium sample in accordance with the second embodiment of the present invention (hereinafter simply referred to as "making apparatus" as the case may be) will now be explained. Fig. 6 is a schematic perspective view of the making apparatus. Since the configuration of this making apparatus 250 is the same as that of the making apparatus 50 shown in Fig. 3 except that the liquid stored in the container part 62 is a liquid adapted to dissolve the substrate 22 of an intermediate sample 100 which will be explained later, and that the exposed surface 3 (the surface on the substrate 22 side) of the intermediate sample 100 opposes the dripping part in the support table 72, individual constituents will not be explained here.

The method of making an optical recording medium sample in accordance with the second embodiment will now be explained. The method of making an optical recording medium sample in accordance with this embodiment is carried out as follows, for example.

The optical disk 1 is prepared. The optical disk is a DVD-RW in this embodiment, but may be a read-only optical disk such as CD or DVD, a recordable optical disk such as CD-R or DVD-R, a rewritable disk of other types such as CD-RW, an optical disk for high-density recording such as Blu-ray disks, or a magneto-optical disk.

Subsequently, using a conventionally known method such as one employing an adhesive tape, the adhesive layer, protective layer 28, and reflecting layer 26 of the prepared optical disk 201 are peeled off.

Instead of an optical disk which is a final product, an intermediate product obtained immediately after forming the recording layer 24 on the substrate 22 or the like may be used for making the optical recording medium sample. In this case, there is no need for providing a step of peeling the protective layer 28 or the like.

Next, the recording layer (organic colorant layer) 24 is dissolved away with a liquid adapted to dissolve the recording layer 24 (colorant layer removing step). As the method of dissolving away, the above-mentioned liquid may be sprayed, or the optical disk 201 in a state exposing the recording layer 24 may be disposed in an atmosphere in which the above-mentioned liquid exists in a mist state. Alternatively, the above-mentioned making apparatus 250 may be used for removing the recording layer 24 by the dripping dissolution. In this case, the optical disk 201 is arranged such that the side exposing the recording layer faces up.

The liquid used for dissolving the recording layer 24 away is not limited in particular as long as it can dissolve the organic colorant material contained in the recording layer 24. Preferred as such a liquid is a polar solvent. More specific examples include ethanol, isopropyl alcohol, and chloroform when a phthalocyanine compound is used in the recording layer 24. More preferred among them are those adapted to dissolve the recording layer 24 alone selectively without dissolving the substrate 22, examples of which include ethanol and isopropyl alcohol.

Though chloroform and the like also dissolve the substrate 22 together with the recording layer 24, they can selectively dissolve the recording layer 24 if their concentration is adjusted appropriately. When a middle layer exists, the middle layer is insoluble to chloroform, so that at least the part of substrate located under the middle layer will remain. In view of the foregoing, chloroform and the like can also be used in the colorant layer removing step.

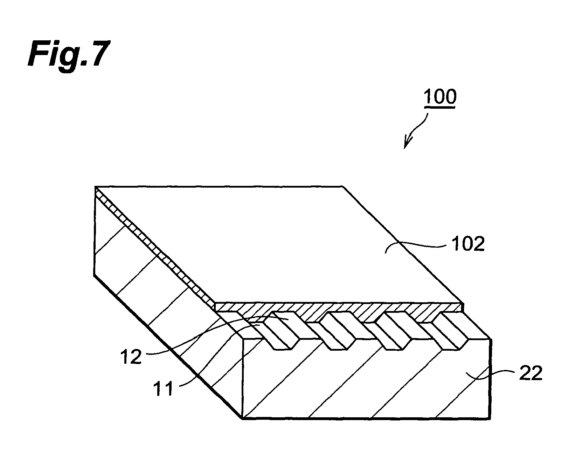

The recording layer 24 may be removed by normal means such as peeling as well.
Next, a support layer 102 is formed on the upper side of the substrate 22 after removing the recording layer 24, so as to yield an intermediate sample 100 (support layer forming step). Fig. 7 is an enlarged perspective view showing a part of the intermediate sample 100 as with Fig. 5. The support layer 102 is provided in order to prevent the optical disk sample obtained by removing the substrate by a substrate removing step, which will be explained later, from warping or flexing. Therefore, any materials having such a function can be used without restrictions in particular. When a relatively flexible material is used for the support layer 102, it will be sufficient if its thickness is made greater. When a relatively hard material is used, it may have a smaller thickness.

From the viewpoint of being able to form the support layer relatively easily, preferably employed as the constituent material is a dielectric material, and more preferred is one formable by vapor deposition. When the support layer 102 is yielded by using vapor deposition, the surface of the support layer 102 in the finally obtained optical disk sample is provided with a form to which the form of the substrate surface is more favorably transferred. As the vapor deposition, PVD (physical vapor deposition) such as sputtering and evaporation and CVD (chemical vapor deposition) can be used favorably. As means for forming this support layer, film-coating /methods such as printing may also be used.

The thickness of the support layer 102 varies depending on the constituent material as mentioned above, and thus cannot be determined uniquely. When ZnS-SiO2 is used as a constituent material of the support layer 102, for example, it will be preferred if its thickness is about 50 to 100 nm, since the surface state having the form of the substrate surface transferred thereto can be maintained thereby as it is.

Subsequently, the substrate 22 is removed (substrate removing step). Though a case using the dripping dissolution is explained in this embodiment, other means can be used without any restrictions in particular as long as they are methods which can yield an optical disk sample by removing the substrate from the intermediate sample 100.

First, the intermediate sample 100 is placed on the medium holding part 70 such that the substrate 22 faces up (toward the nozzle part 64 of the dripping part 60) while the shaft 74 is inserted through the center opening thereof (intermediate sample placing step). Since the upper face of the support table 72 is inclined by a predetermined angle with respect to a horizontal direction, thus set intermediate sample 100 is also in a tilted state here.

The predetermined angle of inclination is determined by how a liquid, which will be explained later, dripped on the intermediate sample 100 and the material of the substrate 22 (hereinafter referred to as "substrate material") dissolved by the liquid flow down, but may be changed as appropriate in order to adjust how they flow down. Namely, when they flow down too fast, the amount of dissolved substrate material with respect to the amount of dripped liquid, i.e., the dissolving efficiency of the substrate material, tends to decrease. When they flow down too slowly, it tends to take too much time, and parts not desired to be dissolved in the substrate 22 are likely to be dissolved. Further, the dissolved substrate material tends to remain at the dripping position, thereby making it harder to yield a clean observation surface. The angle of inclination may be adjusted either before or during a substrate dissolving step which will be explained later. The angle of inclination may be adjusted by appropriately choosing/exchanging a plurality of medium holding parts 70 having respective upper face inclination angles different from each other, or using a mechanism for adjusting the upper face inclination angle provided with the medium holding part 70 beforehand.

Next, an appropriate amount of a liquid is injected into the container part 62 of the dripping part 60 so as to be prepared. Selected as the liquid is one which can dissolve the substrate 22 of the intermediate sample 100 without dissolving the support layer 102 of the intermediate sample 100. For example, when the constituent material of the substrate 22 is a polycarbonate resin while the constituent material of the support layer 102 is ZnS-SiO2 the liquid is preferably an alcohol, a fluorine alcohol, a petroleum-based solvent, or an organic solvent other than cellosolve, which does not dissolve the polycarbonate resin, whereby examples of the liquid include chloroform, THF, acetone, and MEK.

Among them, it will be more preferable if a chlorine-based solvent (chloroform, dichloromethane, or the like) other than carbon tetrachloride is used. Such a chlorine-based solvent tends to dissolve the polycarbonate resin relatively rapidly and further restrain the surface form of the support layer 102 from breaking.

Reasons why the use of such a liquid is likely to further restrain the surface form of the support layer 102 from breaking have not been elucidated in detail at present, but the inventors consider that one of the reasons is as follows. When a resin material such as polycarbonate resin is used as a material for the substrate 22, if a liquid which dissolves the resin relatively moderately is chosen, the liquid seems to dissolve and swell the resin of the substrate 22. In some cases, the support layer 102 seems to break because of the swelling of the resin. If a liquid which dissolves the resin relatively rapidly is used, on the other hand, it seems that the surface form of the support layer 102 tends to be further restrained from breaking, since the resin is hard to swell. The reasons are not restricted to those mentioned above, however.

Next, the above-mentioned liquid is dripped from the nozzle part 64 of the dripping part 60 to the substrate 22 of the intermediate sample 100, so as to dissolve the substrate 22, thereby exposing the contact surface of the support layer 102 with the substrate 22 (substrate dissolving step). The liquid dripping rate at that time can be appropriately adjusted by using the valve part 66 depending on the dissolving efficiency, time, and parts desired to be dissolved, which may be carried out together with the above-mentioned adjustment of the upper face inclination angle of the medium holding part 70. Though the liquid flows down when the dripping rate becomes higher, this will also be referred to as "dripping" in this specification.

Though the position where the liquid drips on the intermediate sample 100 (hereinafter referred to as "dripping position") is not restricted in particular as long as the substrate 22 of the intermediate sample 100 can be dissolved, it will be preferred if the liquid from the dripping part 60 drips on the surroundings of the center opening of the intermediate sample 100. The liquid dripped on the surroundings of the center opening flows down radially outward therefrom, whereby the parts corresponding to the individual regions from the lead-in region to the lead-out region by way of the recording region in the substrate 22 are likely to be dissolved all at once. As a consequence, information items of respective surface states of the substrate in these regions are likely to be obtained all at once.

From the same viewpoint, it will be preferred if the liquid from the dripping part 60 drips on the outer peripheral end part at the highest position in the intermediate sample 100 in the tilted state. The liquid dripped on this part is likely to dissolve the parts of the substrate corresponding to the individual regions from the lead-out region near the outer peripheral end part to lead-in region by way of the recording region all at once.

In the substrate dissolving step, it will be preferred if the liquid is dripped so as to dissolve only a part of the substrate 22. For completely dissolving the substrate 22 away, the substrate dissolving step tends to take a longer time. Also, the optical recording medium sample obtained by completely dissolving the substrate away has flexibility and is likely to change its form, and thus tends to be harder to handle and less suitable to analyze the surface form of the support layer 102 and the like. From such viewpoints and a viewpoint of attaining necessary information, it will be more preferred if the liquid is dripped so as to dissolve a part of the substrate not exceeding 1/3 of the substrate area. However, depending on conditions such as the method of holding the sample, the substrate may be dissolved in excess of the above-mentioned area.

When dripping the liquid, it will be preferred if the substrate dissolving step is carried out while the dripping position is kept at substantially the same position. This tends to save the time and labor of the substrate dissolving step more. It will be more preferable if the liquid is dripped at substantially the same position near the center opening of the intermediate sample 100 or in the highest outer peripheral end part thereof while the intermediate sample 100 is tilted, since particularly necessary information is likely to be obtained thereby while saving the time and labor.

When the intermediate sample 100 is tilted while the liquid dripping position is kept at substantially the same position near the center opening of the intermediate sample 100 or in the highest outer peripheral end part thereof as mentioned above, only a limited radial region of the substrate 22 is likely to be dissolved selectively. This is preferred in particular, since particularly necessary information is likely to be obtained while saving the time and labor, and the surface form of the support layer 102 is likely to be kept.

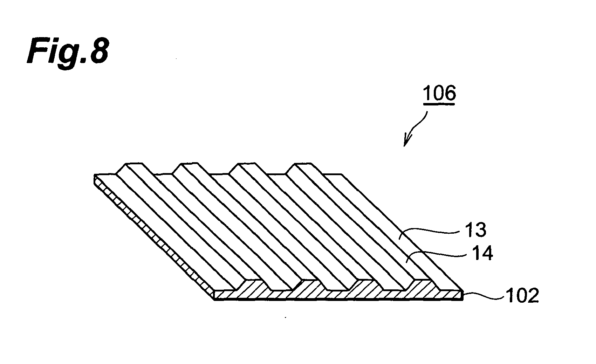

After dissolving the substrate 22 away, the resulting product is washed with ethanol or the like if necessary, whereby an optical disk sample 106 as an optical recording medium sample is obtained. Fig. 8 is a partly enlarged perspective view as with Fig. 5, and is a view showing a part of the optical disk sample 106 as seen from the side to which the surface form of the substrate 22 is transferred. In Fig. 8, projections 14 of the support layer are parts where the grooves 11 of the substrate 22 are transferred, whereas depressions 13 are parts where the lands 12 of the substrate 22 are transferred.

Though the substrate 22 is dissolved away in the method of making an optical recording medium sample in accordance with the embodiment explained in the foregoing, various analyses to be carried out later can analyze the surface state of the substrate 22 in the optical disk 1 sufficiently accurately with a high precision. Though no reasons therefor have been elucidated at present, the inventors consider that one of the reasons therefor is as follows. However, the reasons are not limited thereto.

For directly analyzing the surface of the substrate 22 on the recording layer 24 side in the optical disk 201 mentioned above, it is necessary that the part of the above-mentioned surface of the substrate 22 to be analyzed be exposed completely. When the layers disposed on the surface of the substrate 22 are to be removed by conventional methods, however, a layer (middle layer) which is not supposed to have existed when the optical disk 1 is made remains on the surface of the substrate 22 on the laminate side. The grooves, lands, or roughness of the surface of the substrate 22 seems to form irregularities on the order of several nanometers to several micrometers, so that the state of the substrate surface cannot be analyzed sufficiently accurately with a high precision even if the middle layer slightly remains on the substrate surface 22.

When the method of making an optical recording medium sample in accordance with this embodiment is used, on the other hand, the resulting optical disk sample 106 is in a state where the contact surface of the support layer 102 and middle layer with the substrate 22 is exposed. Also, profiles such as grooves, lands, and surface roughness of the surface of the substrate 22 on the support layer side are sufficiently accurately transferred with a high precision to the contact surface of the support layer 102 and middle layer with the substrate 22. Therefore, the surface state of the substrate 22 can be grasped effectively when the surface of the support layer 102 and middle layer is analyzed without directly analyzing the surface state of the substrate 22.

Though the constituent material of the substrate 22 in the optical disk 201 is a polycarbonate resin in this embodiment, the constituent material of the substrate 22 in the optical disk 1 used in the present invention is not limited thereto. When the optical disk 1 comprises the substrate 22 constituted by a material other than the polycarbonate resin, for example, it will be sufficient if a combination of a solvent and a constituent material of the support layer 102 is chosen such that the solvent can selectively dissolve the substrate 22 without dissolving the support layer 102.

The method of analyzing an optical recording medium in accordance with this embodiment will now be explained. After making the above-mentioned optical disk sample, this analyzing method carries out a step (analyzing step) of analyzing thus obtained optical disk sample by using atomic-force microscopy (AFM) and/or scanning electron microscopy (SEM).

In the AFM method, the contact surface (exposed surface) of the support layer 102 and middle layer with the exposed substrate 22 in the optical disk sample obtained by the above-mentioned making method is directly observed with a conventional atomic-force microscope (AFM). The AFM method has a three-dimensional atomic resolution in the vertical and in-plane directions of the surface of the support layer 102 and middle layer to be observed, and can observe an insulator, an insulator surface in an oxidized state in particular, with a relatively high resolution, so as to be able to obtain information about the surface form of the support layer 102 and middle layer with a high precision on the order of nm.

Using a conventional scanning electronic microscope (SEM), the SEM method observes the exposed surface of the support layer 102 and middle layer of the optical disk sample obtained by the above-mentioned making method after a conductor such as metal is applied thereto by a method such as evaporation as necessary. When the SEM method is used, the surface form of the support layer 102 and middle layer can be observed relatively easily in a three-dimensional fashion, and the form of irregularities in the surface on an order (on the order of µm to mm) higher than that in the above-mentioned AFM method can also be observed. In some cases, without applying the conductor onto the exposed surface of the support layer 102 and middle layer, the exposed surface can be observed by irradiating it with electron beams at a relatively low acceleration voltage or by using a current as small as possible.

Using the AFM and SEM methods in combination can yield information concerning the surface form of the support layer 102 and middle layer in a wider range in particular. Evaluating the surface form by combining the AFM and SEM methods makes it possible to observe a standard sample having a fine form with known dimensions and tolerances in dimensions with each of the AFM and SEM methods, measure the dimensions of the fine form, and compare their results with each other, whereby errors in measurement caused by the difference in measuring methods can be canceled out, for example. As the standard sample, a standard sample for AFM apparatus, in which a rectangular pattern is formed on an Si substrate or the like by a photolithography technique may be used, for example.

Though the apparatus for making an optical recording medium sample, method of making an optical recording medium sample, and method of analyzing an optical recording medium sample in accordance with the second embodiment of the present invention are explained in the foregoing, the apparatus for making an optical recording medium sample, method of making an optical recording medium sample, and method of analyzing an optical recording medium sample in accordance with the present invention are not limited thereto.

For example, the method of making an optical recording medium sample in accordance with another embodiment may be such that a liquid adapted to dissolve the substrate selectively without dissolving the dielectric of the optical recording medium is injected so as to be sprayed onto the optical recording medium, thereby dissolving the substrate. In this making method, as an apparatus for making the optical recording medium sample or a member equipped therewith, a conventional liquid injector such as dispenser can be used. In this case, the substrate can be dissolved either when the surface of the optical recording medium to be sprayed with the liquid is arranged parallel to the vertical direction or oriented in the gravity direction.

When the surface of the substrate on the side opposite from the support layer is provided with a hard coating, the method of making an optical recording medium sample in accordance with still another embodiment may bring the liquid into contact with the substrate after removing the hard coating part by polishing with abrasive paper or the like.

In the method of analyzing an optical recording medium sample in accordance with still another embodiment, the support layer may include a hard coating layer. This allows the optical recording medium sample to further favorably keep the state of the support layer surface to which the surface form of the substrate is transferred. Examples of such a hard coating layer include UV-curable resins and electron-beam-curable resins.

The method of analyzing an optical recording medium sample in accordance with still another embodiment can use a solid surface form observation method other than the above-mentioned AFM and SEM methods, e.g., normal optical microscopy, laser microscopy, transmission electron microscopy (TEM), or energy dispersive spectrometry (EDS).

The method of analyzing an optical recording medium sample in accordance with still another embodiment may use analyzing means normally carried out under an atmospheric pressure condition such as Fourier transform infrared spectroscopy (FT-IR) or Raman spectroscopy, or analyzing means normally carried out under a reduced pressure condition such as Augier electron spectroscopy (AES) or secondary ion mass spectrometry (SIMS). Using these analyzing means can attain information concerning the chemical composition of the middle layer near the exposed surface.

X-ray diffractometry (XRD) can attain information concerning the solid structure of the middle layer, whereas X-ray fluoroscopy (XRF) can yield information concerning the composition of the middle layer. X-ray photoelectron spectroscopy (XPS) or ultraviolet photoelectron spectroscopy (UPS) can attain information concerning the state of combination of atoms on the exposed surface of the middle layer.

A sample may be collected from the exposed surface of the dielectric layer by the above-mentioned making method, and extracted by an acid, alkali, or organic solvent, or a dielectric material may be directly extracted from the surface, and thus obtained extract may be analyzed by analyzing means using inductively coupled plasma (ICP), ion chromatography (IC), liquid chromatography (LC), gas chromatography (GC), or the like.

The above-mentioned analyzing means may be used either singly or in combination of two or more. When these means are combined with sputtering or the like, information concerning the chemical composition of the optical recording medium in the thickness direction, the state of combination of atoms, etc. can also be obtained. In this case, the optical recording medium sample obtained by the making method of the present invention has been rid of the substrate, which is an insulator, from the beginning of the analysis, and thus is likely to suppress shifts in spectral peaks, decrease in intensity, and occurrence of broadening or ghost peaks caused when the insulator is charged even if AES or the like is used.

Various analyzing methods and making apparatus mentioned above can be used in the method of manufacturing an optical disk. For example, after a group (1 lot) of optical disks are manufactured, part of the optical disks may arbitrarily be extracted, and an optical disk sample may be made from thus extracted disk by using the above-mentioned making apparatus. Analyzing this optical disk sample can determine whether the group of optical disks are defective or not. Also, a group of optical disks may be inspected by the above-mentioned analyzing method, and the optical disks determined to be defective may be removed, so as to send only good optical disks to the next step. Further, a problem in the manufacturing condition of the optical disks determined to be defective may be specified, and the process of manufacturing optical disks may be improved according to this problem. Such a method of manufacturing an optical disk becomes effective means for inspecting causes for defective products manufactured, etc., and thus can contribute to keeping a high yield of optical disk products.
Therefore, the use of the above-mentioned making apparatus in the above-mentioned method of manufacturing an optical disk becomes effective means for inspecting causes of defective products manufactured, etc., and thus can contribute to keeping a high yield of optical disk products.

### Examples

In the following, the present invention will be explained in detail with reference to Examples, which do not restrict the present invention.

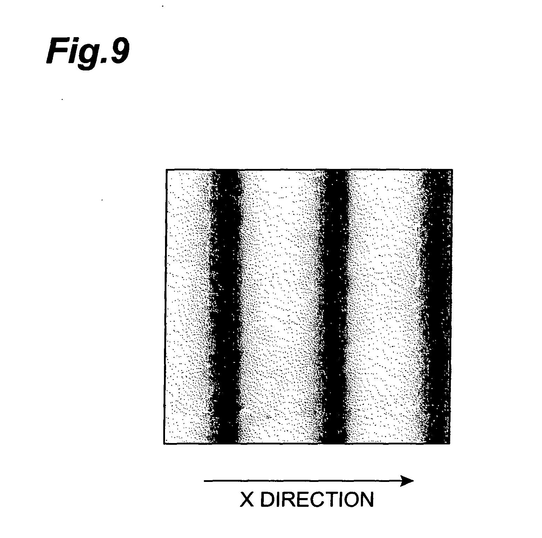

Analysis of DVD-RW Substrate First, the surface form of a normal DVD-RW substrate made of a polycarbonate resin (hereinafter referred to as "PC substrate") was observed by the AFM method. Fig. 9 shows an image of the observation result. It was seen that grooves (black or similar parts) and lands (white or similar parts) were formed like gutters.

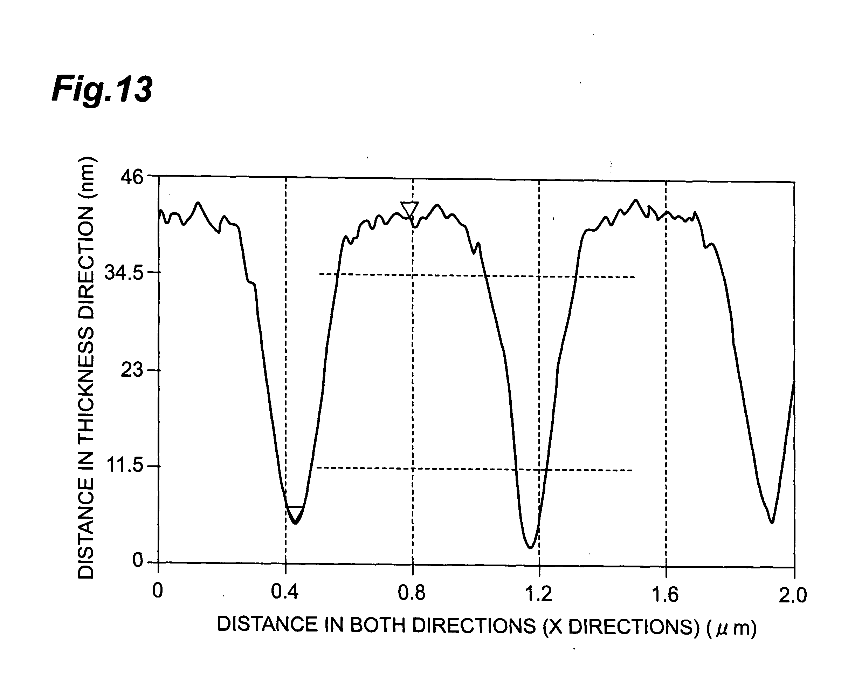

Also, using the AFM method, the depth of the grooves (groove depth) of the PC substrate surface was measured. Fig. 13 shows a profile representing the state of rise and fall of the substrate surface obtained when the AFM probe scanning direction was oriented in the X direction of Fig. 9. As a result, the groove depth was 36 nm. The width of the groove at the midpoint of the groove in the depth direction (hereinafter referred to as "groove half-width") was 225 nm when measured.

### Making of DVD-RW

Next, using a substrate similar to the above-mentioned PC substrate, a DVD-RW disk medium (hereinafter referred to as "optical disk") was obtained by a normal method of manufacturing an optical disk. Namely, a dielectric layer 1 (having a thickness of 72 nm) constituted by ZnS-SiO2 (ZnS/SiO2 = 80/20 in mass ratio), a dielectric layer 2 (having a thickness of 5 nm) constituted by ZnS-SiO2 (ZnS/SiO2 = 50/50 in mass ratio), a recording layer (having a thickness of 19 nm) constituted by AGIST (Ag-Ge-In-Sb-Te), a dielectric layer 3 (having a thickness of 21 nm) constituted by ZnS-SiO2 (ZnS/SiO2 = 50/50 in mass ratio), and a reflecting layer (having a thickness of 0.6 mm) constituted by Al-Cr were successively laminated on the substrate, a dummy substrate (having a thickness of 0.6 mm) was formed thereon by way of an adhesive layer, and a top coating layer (TC) was formed thereon by spin coating with a UV-curable resin compounded with a polyfunctional acrylate, such as DPHA, or the like, whereby an optical disk was obtained.

### Example 1

First, the above-mentioned optical disk was placed on the support table 72 of the medium holding part 70 in the apparatus for making an optical recording medium sample shown in Fig. 3 such that the substrate opposed the dripping part 60. Here, a separatory funnel was used as the dripping part.

Next, an appropriate amount of chloroform as a liquid was injected into the container part 62 of the dripping part 60 in which the valve part 66 was in a closed state.

Subsequently, the valve part 66 was opened such that the dripping rate became 1 to 4 drops/second, so as to start dripping chloroform toward the surroundings of the center opening in the optical disk. During the dripping of chloroform, the dripping position was unchanged. It was seen that the substrate was gradually dissolved radially outward from the dripping position of the optical disk during the dripping.

The dripping of chloroform was terminated at the time when the substrate was dissolved to the outer peripheral end part of the optical disk so that the contact surface of the dielectric layer with the substrate was exposed, whereby the optical disk sample in accordance with Example 1 was obtained.

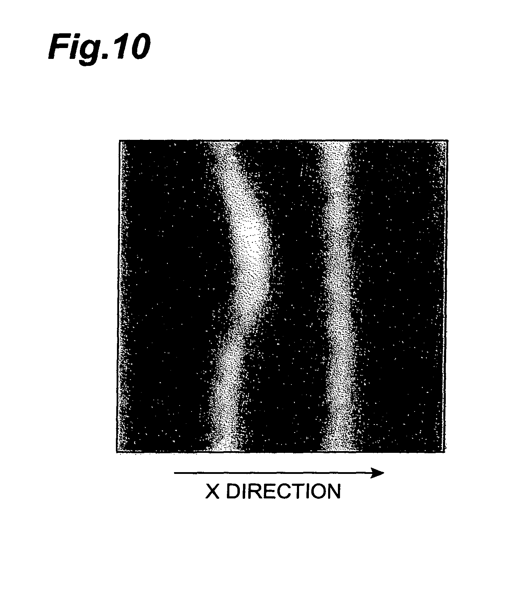

The contact surface (exposed surface) of the dielectric layer with the exposed substrate in the optical disk sample in accordance with Example 1 was observed with AFM. Fig. 10 shows an image of the observation result. Protruded regions (white or similar parts), i.e., parts in contact with the grooves of the substrate, and depressed regions (black or similar parts), i.e., parts in contact with the lands of the substrate, were seen.

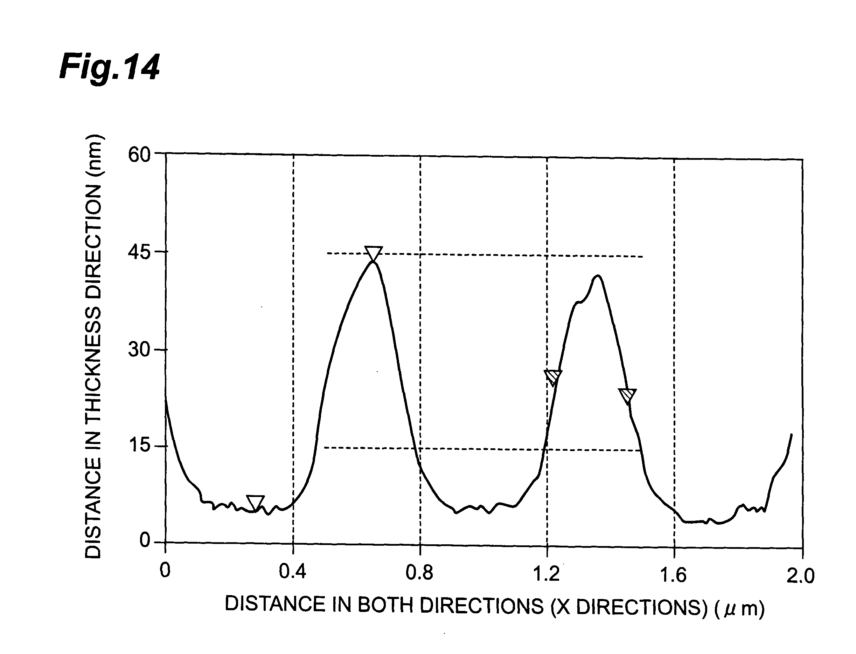

Also, using the AFM method, the height of protruded regions in the exposed surface of the dielectric layer (hereinafter referred to as "protruded region height") was measured (whose profile is shown in Fig. 14) and found to be 39 nm. The width of protruded regions at the midpoint in lands in the height direction (hereinafter referred to as "protruded region half-width") was 228 nm when measured. The protruded region height in the dielectric layer corresponds to the depressed region depth, whereas the protruded region half-width in the dielectric layer corresponds to the depressed region half width.

### Comparative Example 1

First, the adhesive layer of the above-mentioned optical disk was cut in with a cutter knife, and was peeled off from this part, so as to separate the dummy substrate. Subsequently, an adhesive tape was attached to the surface on the PC substrate side exposed by peeling and then was pulled up, so as to further peel off a part of the laminate, whereby the optical disk sample of Comparative Example 1 was obtained. It was visually seen that the dielectric layer 3 and recording layer remained in the surface exposed by the peeling.

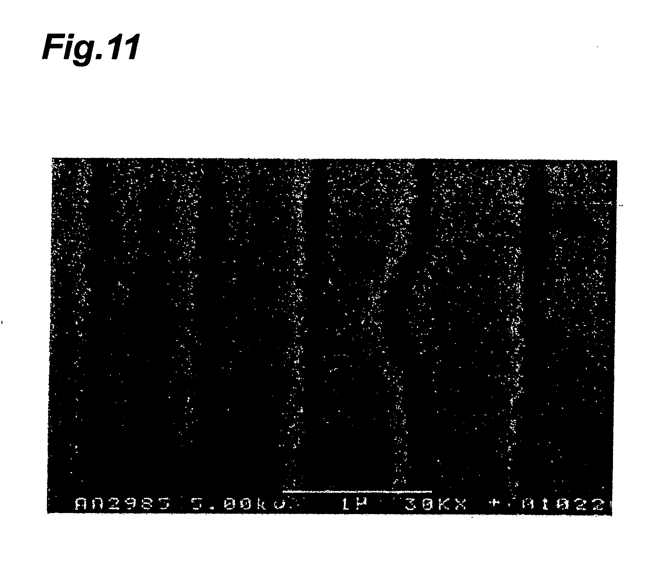

The surface exposed by peeling in the optical disk sample in accordance with Comparative Example 1 was observed with SEM. Fig. 11 shows an image of the observation result.

Also, using the SEM method, the protruded region height of the exposed surface of the optical disk sample was measured and found to be 22 nm. The protruded region half-width was 240 nm when measured.

### Comparative Example 2

First, the adhesive layer of the above-mentioned optical disk was cut in with a cutter knife, and was peeled off from this part, so as to separate the dummy substrate. Subsequently, an adhesive tape was attached to the surface on the PC substrate side exposed by peeling and then was pulled up, so as to further peel off a part of the laminate. It was visually seen that the dielectric layer 3 and recording layer remained in the surface exposed by the peeling.

Next, hydrofluoric acid (with a content of 22%) was dripped onto the exposed surface after the peeling with the adhesive tape, so as to dissolve the dielectric layer 3, and nitric acid (6 N) was further dripped, so as to dissolve the recording layer. Then, concentrated hydrofluoric acid was dripped again, so as to dissolve the dielectric layers 2, 1, whereby the optical disk sample of Comparative Example 2 was obtained.

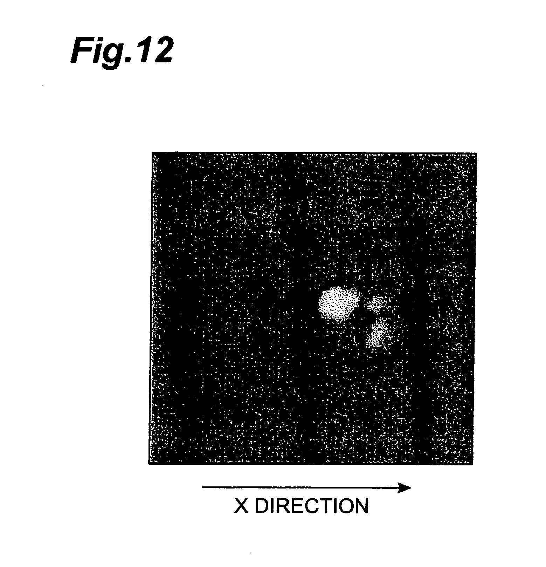

The surface of the optical disk sample in accordance with Comparative Example 2 exposed by the series of processing mentioned above was observed with AFM. Fig. 12 shows an image of the observation result. In particular, parts similar to white were seen and presumed to have been caused by the dielectric layer remained on the substrate.

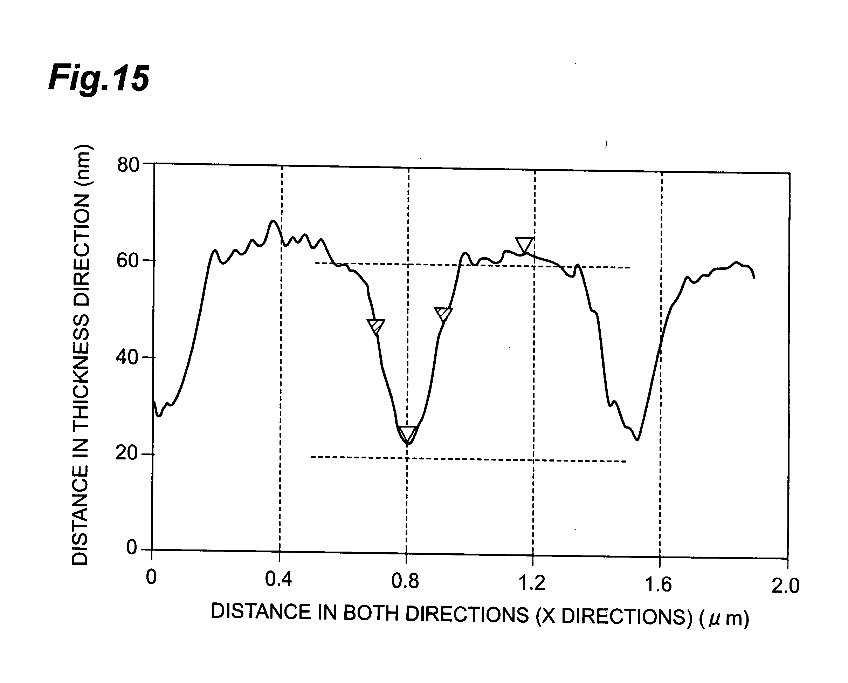

Also, using the AFM method, the protruded region height of the exposed surface in the optical disk sample (whose profile is shown in Fig. 15) was measured by the AFM method and found to be 39 nm. Its protruded region half-width was 228 nm when measured.

### Example 2

Using the method described in Example 1, quality control was carried out in a process of manufacturing a DVD-RW substrate. As a group (1 lot), 200 DVD-RW (optical disks) were made by using the above-mentioned normal method of making DVD-RW. In the optical disks, the target value (spec) of the protruded region height was 40 nm, whereas the target value of the protruded region half-width was 230 nm.

When thus obtained 1 lot of optical disk samples were evaluated by the method described in Example 1, 165 optical disks yielded a protruded region height of 39 nm and a protruded region half-width of 229 nm which were values falling within tolerable ranges, whereas 35 optical disks yielded a protruded region height of 45 nm and a protruded region half-width of 250 nm in a part of the observation surface.

When the manufacturing conditions of these 35 optical disks were studied, it was clarified that an abnormality in discharging occurred near a position where the optical disks were placed in a sputtering apparatus for forming dielectric thin films. After this abnormality in discharging was remedied, 1 lot of optical disks were manufactured again and then were evaluated by the method described in Example 1, whereby all of the 200 optical disks yielded a protruded region height of 39 nm and a protruded region half-width of 229 nm, thus improving the yield.

### Making of CD-R

First, using a polycarbonate resin (PC) substrate, a CD-R disk medium (hereinafter referred to as "optical disk") was obtained by a normal method of making an optical disk. Specifically, on the substrate having lands and grooves, a recording layer (having a thickness of 200 nm) containing a phthalocyanine compound represented by the following formula (2), an Al-Cr reflecting layer (having a thickness of 100 nm), and a PC protective layer (having a thickness of 10 µm) were successively laminated, and then the groove regions were irradiated with a laser beam, whereby an optical disk was obtained.

### [Chemical Formula 2]

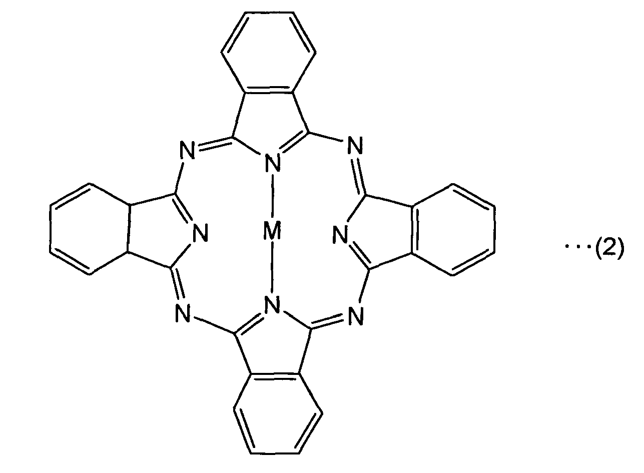

where M is Fe and Cu.

### Example 3

First, an adhesive tape was attached onto the PC protective layer of the above-mentioned optical disk, and then was pulled up, so as to peel the PC protective layer off from the optical disk. Similarly, the Al-Cr reflecting layer was peeled off from the optical disk, whereby a laminate constituted by the substrate and recording layer was obtained.
Subsequently, the laminate obtained by the peeling process mentioned above was placed on the support table 72 of the medium holding part 70 in the apparatus for making an optical recording medium sample shown in Fig. 6 such that the recording layer side opposed the dripping part 60. Here, a separatory funnel was used as the dripping part.

Next, an appropriate amount of ethanol as a liquid was injected into the container part 62 of the dripping part 60 in which the valve part 66 was in a closed state.

Subsequently, the valve part 66 was opened such that the dripping rate became 1 to 4 drops/second, so as to start dripping ethanol toward the surroundings of the center opening in the laminate, dissolve the recording layer away, and wash out the recording layer dissolved from the surface of the PC substrate, thereby yielding an intermediate mainly including the substrate (hereinafter referred to as "intermediate 1").

Then, on the surface of the intermediate 1 on the side having removed the recording layer therefrom, a dielectric layer (having a thickness of 100 nm) made of ZnS-SiO2 was formed by sputtering. For further hardening the optical disk sample, a hard coating layer (material: methacrylate as a UV-curable resin; thickness: 100 µm) was disposed on the dielectric layer, whereby an intermediate sample formed with a support layer (hereinafter referred to as "intermediate 2") was obtained.

Next, the intermediate 2 was placed on the support table 72 of the medium holding part 70 in the apparatus for making an optical recording medium sample shown in Fig. 6 such that the substrate side opposed the dripping part 60. Here, a separatory funnel was used as the dripping part. Then, an appropriate amount of chloroform as a liquid was injected into the container part 62 of the dripping part 60 in which the valve part 66 was in a closed state.

Subsequently, the valve part 66 was opened such that the dripping rate became 1 to 4 drops/second, so as to start dripping chloroform toward the surroundings of the center opening in the laminate. During the dripping of chloroform, the dripping position was unchanged. It was seen that the substrate was gradually dissolved radially outward from the dripping position of the intermediate 2 during the dripping.

The dripping of chloroform was terminated at the time when the substrate was dissolved to the outer peripheral end part of the optical disk so that the contact surface of the dielectric layer with the substrate was exposed, whereby the optical disk sample in accordance with Example 3 was obtained.

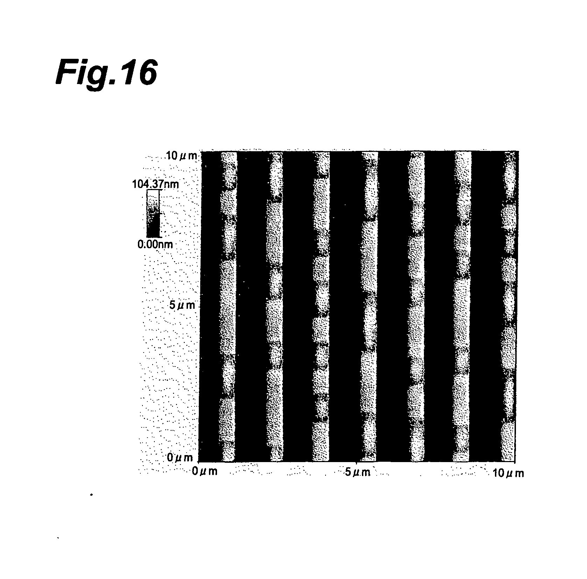

The contact surface (exposed surface) of the dielectric layer with the exposed substrate in the optical disk sample in accordance with Example 3 was observed with AFM. Fig. 16 shows an image of the observation result. Protruded regions (white or similar parts), i.e., parts in contact with the grooves of the substrate, and depressed regions (black or similar parts), i.e., parts in contact with the lands of the substrate, were seen. In the protruded regions, depressions formed upon irradiation with the laser beam were seen. The depth of the depressions was measured with the AFM method and found to be 7% to 8% of the height of the above-mentioned protruded regions.

The elemental analysis of the above-mentioned depressions was carried out with ICP-MS, whereby carbon, hydrogen, and oxygen were seen as in PC, and Fe and Cu which were metals contained in a phthalocyanine compound were detected.

### Comparative Example 3

First, an adhesive tape was attached onto the PC protective layer of the above-mentioned optical disk, and then was pulled up, so as to peel the PC protective layer off from the optical disk. Similarly, the Al-Cr reflecting layer was peeled off from the optical disk, whereby a laminate constituted by the substrate and recording layer was obtained.

Subsequently, the laminate obtained by the peeling process mentioned above was placed on the support table 72 of the medium holding part 70 in the apparatus for making an optical recording medium sample shown in Fig. 6 such that the recording layer side opposed the dripping part 60. Here, a separatory funnel was used as the dripping part.

Next, an appropriate amount of ethanol as a liquid was injected into the container part 62 of the dripping part 60 in which the valve part 66 was in a closed state.

Subsequently, the valve part 66 was opened such that the dripping rate became 1 to 4 drops/second, so as to start dripping ethanol toward the surroundings of the center opening in the laminate, dissolve the recording layer away, and wash out the recording layer dissolved from the surface of the PC substrate, thereby yielding the optical disk sample in accordance with Comparative Example 3.

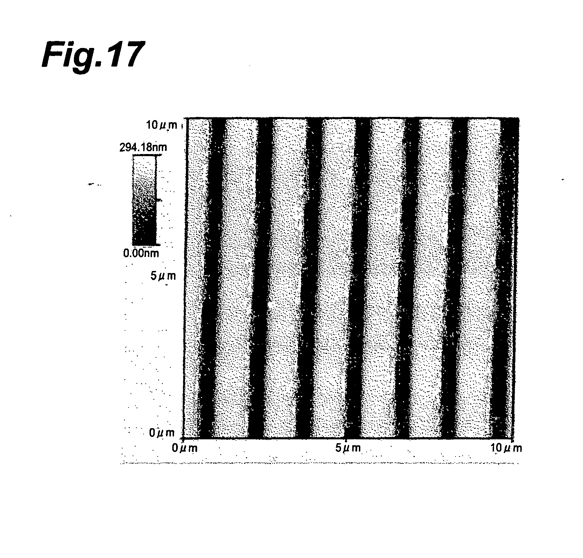

The exposed surface of the optical disk sample in accordance with Comparative Example 3 on the side having removed the recording layer therefrom was observed with AFM. Fig. 17 shows an image of the observation result. Protruded regions (white or similar parts), i.e., parts in contact with the grooves of the substrate, and depressed regions (black or similar parts), i.e., parts in contact with the lands of the substrate, were seen. In the depressed regions, projections formed by irradiation with the laser beam were seen. The height of the projections was measured with the AFM method and found to be 30% to 50% of the depth of the above-mentioned depressed regions.

The elemental analysis of the above-mentioned projections was carried out with ICP-MS, whereby carbon, hydrogen, and oxygen were seen as in the depressed parts in Example 1, and Fe and Cu which were metals contained in a phthalocyanine compound were detected.

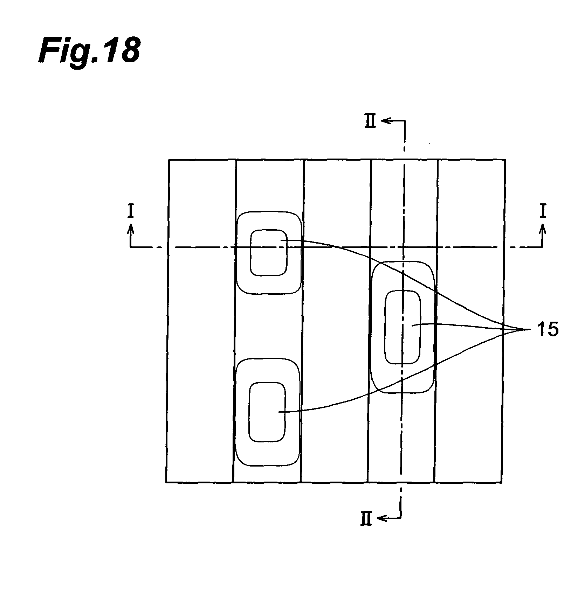

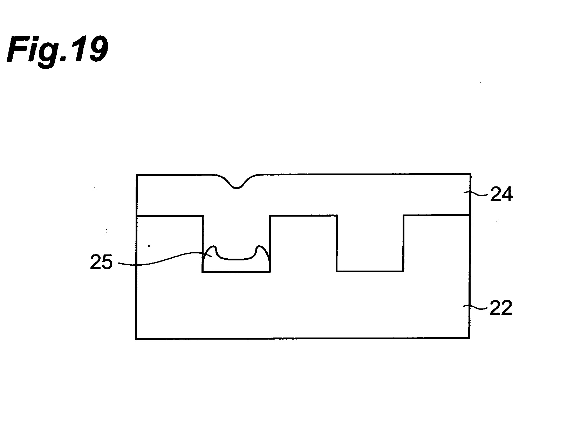

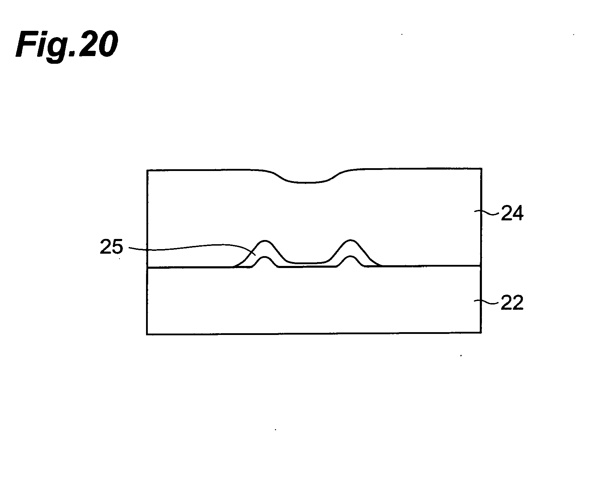

Fig. 18 is a schematic plan view showing a major part of the above-mentioned optical disk formed with pits suggested by Example 3 and Comparative Example 3. Figs. 19 and 20 are schematic end face views of the optical disk shown in Fig. 18. Fig. 18 shows that the parts (pits) referred to with numeral 15 were irradiated with pumping light. In the pits 15, it seems that the recording layer 24 and substrate 22 are deformed while a middle layer 25 is generated as shown in the end face view of Fig. 19. Though the surface form of the middle layer 25 can be seen, the surface form of the substrate 22 thereunder is presumed to have been indiscernible in Comparative Example 3. In Example 3, on the other hand, it is seen that the surface form of the substrate 22 transferred to the contact surface of the middle layer 25 with the substrate 22 has been discernible.

## Claims

1. A method of making an optical recording medium sample, the method comprising:
a laminate preparing step of preparing a laminate including a substrate used for an optical recording medium, and a functional layer formed adjacent to one side of the substrate; and
a substrate removing step of removing a predetermined part of the substrate in the laminate so as to expose a contact surface of the functional layer with the substrate.

2. A method of making an optical recording medium sample according to claim 1, wherein the laminate preparing step is a step of preparing a laminate including the substrate and a dielectric layer formed adjacent to one side of the substrate; and
wherein the substrate removing step is a step of removing a predetermined part of the substrate so as to expose a contact surface of the dielectric layer with the substrate.

3. A method of making an optical recording medium sample according to claim 2, wherein the substrate removing step removes a part of the substrate so as to expose a part of the contact surface of the dielectric layer with the substrate.

4. A method of making an optical recording medium sample according to claim 2, wherein the substrate removing step dissolves the substrate by using a liquid adapted to dissolve the substrate selectively without dissolving the dielectric layer, so as to expose the contact surface of the dielectric layer with the substrate.

5. A method of making an optical recording medium sample according to claim 4, wherein the substrate removing step arranges the optical recording medium such that the surface of the substrate opposite from the dielectric layer faces up, and drips the liquid onto the surface so as to dissolve a predetermined part of the substrate, thereby exposing the contact surface of the dielectric layer with the substrate.

6. A method of making an optical recording medium sample according to claim 4 or 5, wherein the substrate removing step arranges the optical recording medium obliquely such that the surface of the substrate opposite from the dielectric layer faces up and forms a predetermined angle with a horizontal direction, and drips the liquid onto the surface of the substrate opposite from the dielectric layer.

7. A method of making an optical recording medium sample according to one of claims 4 to 6, wherein a constituent material of the substrate is a polycarbonate resin;
wherein a constituent material of the dielectric layer is a dielectric oxide or dielectric nitride; and
wherein the liquid is a liquid containing a polar solvent as a main ingredient.

8. A method of making an optical recording medium sample according to one of claims 4 to 6, wherein a constituent material of the substrate is a polycarbonate resin;
wherein a constituent material of the dielectric layer is at least one species selected from the group consisting of ZnS-SiO2, SiCO, CeO2 SiN, and AlN; and
wherein the liquid is a liquid containing at least one organic solvent selected from the group consisting of chloroform, dichloromethane, THF, acetone, and methylethylketone as a main ingredient.

9. A method of making an optical recording medium sample according to claim 1, wherein the laminate preparing step comprises an organic colorant layer removing step of removing an organic colorant layer from the optical recording medium comprising a substrate and the organic colorant layer formed on one side of the substrate; and a support layer forming step of yielding an intermediate sample by forming a support layer on the side of the substrate having the organic colorant layer removed therefrom; and
wherein the substrate removing step is a step of removing a predetermined part of the substrate from the intermediate sample.

10. A method of making an optical recording medium sample according to claim 9, wherein the laminate preparing step yields the intermediate sample from an optical recording medium further comprising a middle layer between the substrate and the organic colorant layer.

11. A method of making an optical recording medium sample according to claim 9 or 10, wherein the laminate preparing step yields the intermediate sample from an optical recording medium further comprising a middle layer between the substrate and the organic colorant layer, the middle layer being formed by irradiating the optical recording medium with pumping light.

12. A method of making an optical recording medium sample according to one of claims 9 to 11, wherein the laminate preparing step yields the intermediate sample from an optical recording medium comprising a layer containing a phthalocyanine compound as the organic colorant layer.

13. A method of making an optical recording medium sample according to one of claims 9 to 12, wherein the organic colorant layer removing step dissolves the organic colorant layer away.

14. A method of making an optical recording medium sample according to claim 13, wherein the organic colorant layer removing step dissolves the organic colorant layer away by using chloroform.

15. A method of making an optical recording medium sample according to claim 13, wherein the organic colorant layer removing step dissolves the organic colorant layer away by using a liquid adapted to dissolve the organic colorant layer selectively without dissolving the substrate.

16. A method of making an optical recording medium sample according to claim 13, wherein the organic colorant layer removing step dissolves the organic colorant layer away by using ethanol and/or isopropyl alcohol.

17. A method of making an optical recording medium sample according to one of claims 9 to 16, wherein the support layer contains a dielectric material.

18. A method of making an optical recording medium sample according to one of claims 9 to 16, wherein the support layer contains a layer formed by vapor deposition.

19. A method of making an optical recording medium sample according to one of claims 9 to 16, wherein the support layer contains a hard coating layer.

20. A method of making an optical recording medium sample according to one of claims 9 to 19, wherein the substrate removing step dissolves the substrate away.

21. A method of making an optical recording medium sample according to claim 20, wherein the substrate removing step dissolves the substrate away by using chloroform.

22. A method of making an optical recording medium sample according to claim 20, wherein the substrate removing step arranges the intermediate sample such that the surface of the substrate opposite from the organic colorant layer faces up, and drips a liquid adapted to dissolve the substrate onto the surface so as to dissolve a predetermined part of the substrate.

23. A method of making an optical recording medium sample according to claim 20, wherein the substrate removing step arranges the intermediate sample obliquely such that the surface of the substrate opposite from the support layer faces up and forms a predetermined angle with a horizontal direction, and drips the liquid onto the surface of the substrate opposite from the support layer.

24. A method of making an optical recording medium sample according to one of claims 9 to 23, wherein the optical recording medium comprises, as the substrate, a substrate containing a polycarbonate resin.

25. A method of making an optical recording medium sample, the method comprising:
a step of preparing an optical recording medium comprising a substrate containing a polycarbonate resin, an organic colorant layer containing a phthalocyanine compound formed on one side of the substrate, a middle layer formed between the substrate and the organic colorant layer by irradiating the optical recording medium with pumping light;
a step of dissolving the organic colorant layer away from the optical recording medium by using at least one species of solvent selected from the group consisting of chloroform, ethanol, and isopropyl alcohol;
a step of forming a support layer containing a dielectric material by vapor deposition on the side of the substrate having removed the organic colorant layer therefrom, so as to form an intermediate sample; and
a substrate removing step of arranging the intermediate sample such that the surface of the substrate opposite from the support layer faces up and forms a predetermined angle with a horizontal direction, and dripping an aqueous chloroform solution onto the surface of the substrate opposite from the support layer, so as to dissolve the substrate away.

26. A method of analyzing an optical recording medium sample, the method comprising:
an optical recording medium sample preparing step of removing a part of a substrate used for an optical recording medium from a laminate comprising the substrate and a functional layer formed adjacent to one side of the substrate, so as to prepare an optical recording medium sample exposing a contact surface of the functional layer with the substrate; and
an analyzing step of analyzing the exposed contact surface.

27. A method of analyzing an optical recording medium according to claim 26, wherein, as the laminate, a laminate comprising a substrate used for the optical recording medium and a dielectric layer formed adjacent to one side of the substrate is used.

28. A method of analyzing an optical recording medium according to claim 26, wherein, as the laminate, an intermediate sample obtained by removing an organic colorant layer from a laminate comprising a substrate used for the optical recording medium and the organic colorant layer formed adjacent to one side of the substrate and forming a support layer on the surface of the substrate having the organic colorant layer removed therefrom is used.

29. An apparatus for making an optical recording medium sample, the apparatus comprising:
a medium holding part for holding a laminate comprising a substrate and a functional layer formed on one surface of the substrate such that the surface of the substrate opposite from the functional layer faces up; and
a dripping part for dripping a liquid adapted to dissolve the substrate selectively without dissolving the functional layer onto the surface of the substrate opposite from the functional layer.

30. An apparatus for making an optical recording medium sample according to claim 29, wherein the medium holding part holds the laminate obliquely such that the surface of the substrate opposite from the functional layer forms a predetermined angle with a horizontal direction.

31. A method of manufacturing an optical recording medium, the method comprising:
a step of successively forming at least a dielectric layer, a recording layer, and a reflecting layer on one side of a substrate so as to yield an optical recording medium;
a step of preparing a laminate comprising the substrate and dielectric layer, and removing a predetermined part of the substrate from the laminate so as to expose a contact surface of the dielectric layer with the substrate and yield an optical recording medium sample; and
a quality control step of analyzing the contact surface of the optical recording medium sample exposed by removing the predetermined part of the substrate.

32. A method of manufacturing an optical recording medium, the method comprising:
a step of successively forming at least an organic colorant layer and a reflecting layer on one side of a substrate so as to yield an optical recording medium;
a step of preparing a laminate comprising the substrate and organic colorant layer, removing the organic colorant layer from the optical recording medium, forming a support layer on the side of the substrate having the organic colorant layer removed therefrom, so as to yield an intermediate sample, and removing a predetermined part of the substrate of the intermediate sample so as to yield an optical recording medium sample; and
a quality control step of analyzing the surface of the optical recording medium sample exposed by removing the predetermined part of the substrate.

33. A method of manufacturing an optical recording medium according to claim 32 or 33, further comprising a step of adjusting a manufacturing condition of the optical recording medium according to an analysis result of the quality control step.
